# EUROPEAN PATENT SPECIFICATION

(11) **EP 1 837 352 B1**
(45) Date of publication and mention of the grant of the patent: **04.03.2015**
(21) Application number: 06711673.1
(22) Date of filing: 13.01.2006
(51) Int. Cl.: C08F 299/00, C08F 8/00, C08F 2/50, C08F 4/40, C08F 290/04

(54) **ACTIVE ENERGY RAY-CURABLE COMPOSITION AND CURED PRODUCT THEREOF**
AKTIVENERGIESTRAHLENHÄRTBARE ZUSAMMENSETZUNG UND VERNETZTES PRODUKT DARAUS
COMPOSITION RETICULABLE PAR RAYONS D'ENERGIE ACTIVE ET PRODUIT RETICULE REALISE AVEC LA COMPOSITION

(30) Priority: 14.01.2005 JP 2005007783
(43) Date of publication of application: 26.09.2007
(73) Proprietor: KANEKA CORPORATION, Osaka (JP)
(72) Inventor: ONO, Shigeki, Settsu-shi, Osaka, 5660072 (JP); NAKAGAWA, Yoshiki, Settsu-shi, Osaka, 5660072 (JP)
(74) Representative: Hart-Davis, Jason
(86) International application number: PCT/JP2006/300388
(87) International publication number: WO 2006/075712

(56) References cited:
- EP-A1- 1 873 175
- EP-A1- 1 923 431
- EP-A1- 1 947 129
- EP-A1- 1 967 533
- WO-A1-98/27171
- WO-A1-99/65963
- JP-A- 05 134 101
- JP-A- 11 210 981
- JP-A- 2000 072 815
- JP-A- 2000 095 826
- JP-A- 2000 191 728
- JP-A- 2001 049 198
- JP-A- 2001 055 551
- JP-A- 2003 026 715
- US-A1- 2004 235 977

## Description

### TECHNICAL FIELD

The present invention relates to an active energy ray-curable composition and a cured product derived from that composition. More particularly, it relates to an active energy ray-curable composition comprising, as essential components, a vinyl polymer having a (meth)acryloyloxy type group at a molecular terminus and an acylphosphine oxide photopolymerization initiator.

### BACKGROUND ART

Owing to their good thermal stability, oil resistance and other characteristics, acrylic rubbers constitute a class of excellent materials used as functional parts or members, safety members and so forth, typically for use around automotive engines.

(Meth)acrylic polymer-containing gaskets have been reported (Patent Document 1). However, they are not active energy ray-curable compositions capable of rapid curing.

On the other hand, the use of certain urethane-(meth)acrylate resins as main components gives moldings excellent in oil resistance (Patent Document 2). However, since they contain ether and/or ester bonds in the main chain, these resins are deficient in long-term thermal stability.

The present inventors have so far reported about (meth)acryloyl group-terminated polymers whose main chain is a (meth)acrylic polymer obtained by living radical polymerization (Patent Document 3 and 4). For producing relatively thick cured products, however, there is encountered the problem that those parts which are relatively distant from the active energy ray irradiation plane are cured only to an insufficient extent, namely the so-called poor depth curability problem. Another problem is that when a photoinitiator is used, the cured products are readily destroyed on the occasion of high-temperature compression thereof (in permanent compression set according to JIS K 6262).
Patent Document 1: Japanese Kokai Publication 2000-154370
Patent Document 2: Japanese Kokai Publication Sho-64-112
Patent Document 3: Japanese Kokai Publication 2000-72816
Patent Document 4: Japanese Kokai Publication 2000-95826

### SUMMARY OF THE INVENTION

It is an object of the present invention to provide an active energy ray-curable composition excellent in curability, in particular in depth curability, and capable of providing cured products excellent in thermal stability, weather resistance, oil resistance and permanent compression set, among others, as well as a cured product derived therefrom.

The present invention relates to active energy ray-curable compositions respectively having the constitutions given below and cured products derived therefrom.
(1) An active energy ray-curable composition
   which comprises the following components (A) and (B) as essential components:
   (A) A vinyl polymer having at least one terminal group represented by the general formula (1):

      -OC(O)C(R^{a}) =CH₂ (1)

      (wherein R^{a} represents a hydrogen atom or an organic group containing 1 to 20 carbon atoms) per molecule;
   (B) At least one acylphosphine oxide photopolymerization initiator represented by the general formula (2):

      R¹R²P(=O)C(=O)R³ (2)

      [wherein R¹ represents C₁₋₁₂ alkyl, benzyl, phenyl which may optionally be substituted, cyclohexyl, -COR³, -OR⁴ (R⁴ representing C₁₋₈ alkyl, phenyl or benzyl) or a group represented by the general formula (3):

      -A-(R²)P(=O)C(=O)R³ (3)

      (A representing C₁₋₁₈ alkylene, phenylene or biphenylene) ;
      R² represents C₁₋₁₂ alkyl, benzyl, phenyl which may optionally be substituted, cyclohexyl or -COR³; and
      R³ represents phenyl which may optionally be substituted, or a group represented by the general formula (4):

      -B-C(=O)P(=O)R¹R² (4)

      (B representing C₁₋₁₂ alkylene, cyclohexylene or phenylene)].
(2) An active energy ray-curable composition as set forth above under (1),
   wherein the vinyl monomer constituting the main chain of the component (A) is a (meth)acrylic monomer.
(3) An active energy ray-curable composition as set forth above under (1) or (2),
   wherein the vinyl monomer constituting the main chain of the component (A) is an acrylic ester monomer.
(4) An active energy ray-curable composition as set forth above under any of (1) to (3),
   wherein the vinyl monomer constituting the main chain of the component (A) comprises at least one monomer selected from among butyl acrylate, ethyl acrylate and 2-methoxyethyl acrylate.
(5) An active energy ray-curable composition as set forth above under any of (1) to (4),
   wherein, in the component (A), R^{a} in formula (1) is a hydrogen atom or a methyl group.
(6) An active energy ray-curable composition as set forth above under any of (1) to (5),
   wherein the component (A) is produced by reacting a halogen group-terminated vinyl polymer with a compound represented by the general formula (5):

   M⁺⁻OC(O)C(R^{a})=CH₂ (5)

   (wherein R^{a} represents a hydrogen atom or an organic group containing 1 to 20 carbon atoms and M⁺ represents an alkali metal ion or a quaternary ammonium ion).
(7) An active energy ray-curable composition as set forth above under (6),
   wherein the halogen group-terminated vinyl polymer has a group represented by the general formula (6):

   -CR⁵R⁶X (6)

   (wherein R⁵ and R⁶ represents the groups bound to the ethylenically unsaturated group of the vinyl monomer and X represents a chlorine atom, a bromine atom, or an iodine atom).
(8) An active energy ray-curable composition as set forth above under any of (1) to (5),
   wherein the component (A) is produced by reacting a hydroxyl group-terminated vinyl polymer with a compound represented by the general formula (7):

   X¹C(O)C(R^{a})=CH₂ (7)

   (wherein R^{a} represents a hydrogen atom or an organic group containing 1 to 20 carbon atoms and X¹ represents a chlorine atom, a bromine atom, or a hydroxyl group).
(9) An active energy ray-curable composition as set forth above under any of (1) to (5),
   wherein the component (A) is produced by (1) reacting a hydroxyl group-terminated vinyl polymer with a diisocyanate compound and (2) reacting the remaining isocyanate group with a compound represented by the general formula (8):

   HO-R'-OC(O)C(R^{a})=CH₂ (8)

   (wherein R^{a} represents a hydrogen atom or an organic group containing 1 to 20 carbon atoms and R' represents a divalent organic group containing 2 to 20 carbon atoms).
(10) An active energy ray-curable composition as set forth above under any of (1) to (9),
   wherein the main chain of the component (A) is produced by living radical polymerization of a vinyl monomer(s).
(11) An active energy ray-curable composition as set forth above under (10),
   wherein the living radical polymerization is carried out in the manner of atom transfer radical polymerization.
(12) An active energy ray-curable composition as set forth above under (11),
   wherein the atom transfer radical polymerization is carried out in the presence of a transition metal complex catalyst selected from among complexes of copper, nickel, ruthenium or iron.
(13) An active energy ray-curable composition as set forth above under (12),
   wherein the transition metal complex is a copper complex.
(14) An active energy ray-curable composition as set forth above under any of (1) to (9),
   wherein the main chain of the component (A) is produced by polymerization of a vinyl monomer (s) using a chain transfer agent.
(15) An active energy ray-curable composition as set forth above under any of (1) to (14),
   wherein the component (A) has a number average molecular weight of not lower than 3000.
(16) An active energy ray-curable composition as set forth above under any of (1) to (15),
   wherein the component (A) vinyl polymer shows a weight average molecular weight/number average molecular weight ratio value of smaller than 1.8 as determined by gel permeation chromatography.
(17) An active energy ray-curable composition as set forth above under any of (1) to (16)
   which further comprises, in addition to the component (A) and component (B), a photopolymerization initiator other than the component (B) as a component (C).
(18) An active energy ray-curable composition as set forth above under (17),
   wherein the component (C) photopolymerization initiator is at least one compound selected from among α-hydroxyketone compounds and phenyl ketone derivatives.
(19) An active energy ray-curable composition as set forth above under any of (1) to (18)
   which contains a radical-polymerizable group-containing monomer and/or oligomer.
(20) An active energy ray-curable composition as set forth above under any of (1) to (18)
   which contains an anionic polymerizable group-containing monomer and/or oligomer.
(21) An active energy ray-curable composition as set forth above under any of (1) to (18)
   which contains a (meth)acryloyl type group-containing monomer and/or oligomer.
(22) An active energy ray-curable composition as set forth above under (21)
   which contains a (meth)acryloyl type group-containing monomer and/or oligomer having a number average molecular weight of not higher than 5000.
(23) An active energy ray-curable composition as set forth above under any of (1) to (22)
   wherein the content of the component (B) therein is 0.001 to 10 parts by weight per 100 parts by weight of the component (A).
(24) An active energy ray-curable composition as set forth above under any of (1) to (23)
   wherein the content of the component (B) therein is 0.001 to 0.5 parts by weight per 100 parts by weight of the component (A).
(25) An active energy ray-curable composition as set forth above under any of (1) to (24),
   wherein the component (B) acylphosphine oxide photopolymerization initiator comprises at least one species selected from among 2,4,6-trimethylbenzoyldiphenyl-phosphine oxide, bis(2,4,6-trimethylbenzoyl)phenylphosphine oxide and bis(2,6-dimethoxybenzoyl)-2,4,4-trimethylpentylphosphine oxide.
(26) A cured product obtained by irradiating an active energy ray-curable composition as set forth above under any of (1) to (25) with active energy rays.

In the following, the active energy ray-curable compositions according to the invention and the cured products derived therefrom are described.

### DETAILED DESCRIPTION OF THE INVENTION

The active energy ray-curable composition of the present invention comprises the following components (A) and (B) as essential components:
(A) A vinyl polymer having at least one terminal group represented by the general formula (1):

   -OC(O)C(R^{a})=CH₂ (1)

   (wherein R^{a} represents a hydrogen atom or an organic group containing 1 to 20 carbon atoms) per molecule;
(B) At least one acylphosphine oxide photopolymerization initiator represented by the general formula (2):

   R¹R²P(=O)C(=O)R³ (2)

   [wherein R¹ represents C₁₋₁₂ alkyl, benzyl, phenyl which may optionally be substituted, cyclohexyl, -COR³, -OR⁴ (R⁴ representing C₁₋₈ alkyl, phenyl or benzyl) or a group represented by the general formula (3):

   -A-(R²)P(=O)C(=O)R³ (3)

   (A representing C₁₋₁₈ alkylene, phenylene or biphenylene);
   R² represents C₁₋₁₂ alkyl, benzyl, phenyl which may optionally be substituted, cyclohexyl or -COR³; and
   R³ represents phenyl which may optionally be substituted, or a group represented by the general formula (4):

   -B-C(=O)P(=O)R¹R² (4)

   (3 representing C₁₋₁₂ alkylene, cyclohexylene or phenylene)].

### <<Component (A) >>

Component (A) is a vinyl polymer having at least one (meth)acryloyloxy type group represented by the general formula (1) :

-OC(O)C(R^{a})=CH₂ (1)

(wherein R² represents a hydrogen atom or an organic group containing 1 to 20 carbon atoms) at the terminus per molecule;

The (meth)acryloyloxy type group mentioned above preferably occurs at a molecular terminus of the vinyl polymer from the viewpoint of obtaining rubber elasticity by rendering the intercrosslink molecular weights uniform and relatively high, preferably 500 to 100000.

In the (meth)acryloyloxy type group, R^{a} represents a hydrogen atom or an organic group having 1 to 20 carbon atoms and preferably a hydrogen atom or a hydrocarbon group having 1 to 20 carbon atoms.

Examples of the hydrocarbon group having 1 to 20 carbon atoms include an alkyl group having 1 to 20 carbon atoms, an aryl group having 6 to 20 carbon atoms, an aralkyl group having 7 to 20 carbon atoms, and a nitrile group. These groups may be substituted with a hydroxyl group or the like.

Examples of an alkyl group having 1 to 20 carbon atoms include methyl, ethyl, propyl, butyl, pentyl, hexyl, octyl, and decyl.

Examples of an aryl group having 6 to 20 carbon atoms include phenyl and naphthyl.

Examples of an aralkyl group having 7 to 20 carbon atoms include benzyl and phenylethyl.

Preferred examples of R^{a} include -H, -CH₃, -CH₂CH₃, -(CH₂)ₙCH₃ (n represents an integer of 2 to 19), -C₆H₅, -CH₂OH, and -CN. Among these groups, -H and -CH₃ are more preferred.

As a vinyl monomer which constitutes the main chain of the component (A) is not particularly limited, and any of various monomers can be used. Examples of the vinyl monomer include (meth) acrylic acid monomers, such as (meth) acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxy)propyltrimethoxysilane, ethylene oxide adduct of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate; aromatic vinyl monomers, such as styrene, vinyltoluene, α-methylstyrene, chlorostyrene, and styrenesulfonic acid and its salts; fluorine-containing vinyl monomers, such as perfluoroethylene, perfluoropropylene, and vinylidene fluoride; silicon-containing vinyl monomers, such as vinyltrimethoxysilane and vinyltriethoxysilane; maleic anhydride, maleic acid, and monoalkyl esters and dialkyl esters of maleic acid; fumaric acid and monoalkyl and dialkyl esters of fumaric acid; maleimide monomers, such as, maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile-containing vinyl monomers, such as acrylonitrile and methacrylonitrile; amido-containing vinyl monomers, such as acrylamide and methacrylamide; vinyl esters, such as vinyl acetate, vinyl propionate, vinyl pivalate, vinyl benzoate, and vinyl cinnamate; alkenes, such as ethylene and propylene; conjugated dienes, such as butadiene and isoprene; and vinyl chloride, vinylidene chloride, allyl chloride, and allyl alcohol. These compounds may be used alone, or at least two may be used in combination.

In particular, from the viewpoint of physical properties of a product, aromatic vinyl monomers and (meth)acrylic monomers are preferred. Acrylate monomers and methacrylate monomers are more preferred, and butyl acrylate, ethyl acrylate, and 2-methoxyethyl acrylate are further preferred. From the viewpoint of oil resistance of the on-site forming gaskets, and the like, the vinyl monomer which constitutes the main chain particularly preferably contains at least one species selected from butyl acrylate, ethyl acrylate, and 2-methoxyethyl acrylate.

In the present invention, these preferred monomers may be copolymerized with another monomer mentioned above. In this case, the content by weight of the preferred monomers is preferably 40% by weight or more. In the above expression, the term " (meth) acrylic acid" means acrylic acid and/or methacrylic acid.

The molecular weight distribution [ratio of the weight-average molecular weight (Mw) to the number-average molecular weight (Mn) determined by gel permeation chromatography (GPC)] of the component (A) is not particularly limited, but the ratio is preferably less than 1.8, further preferably 1.7 or less, more preferably 1.6 or less, particularly preferably 1.5 or less, specifically preferably 1.4 or less, and most preferably 1.3 or less.

In GPC measurement in the present invention, a molecular weight is generally determined in terms of polystyrene using a polystyrene gel column and chloroform or tetrahydrofuran as a mobile phase.

The lower limit of number-average molecular weight of the component (A) is preferably 500, more preferably 3, 000, and the upper limit thereof is preferably 100,000, more preferably 40,000. When the molecular weight is less than 500, the inherent characteristics of the vinyl polymer tends to be not easily exhibited, while when the molecular weight is 100,000 or more, handling tends to become difficult.

### <Process for producing component (A)>

The process for producing the component (A) is not particularly limited.

A vinyl polymer is generally produced by anionic polymerization or radical polymerization, but radical polymerization is preferred in view of versatility of a monomer or easy control. As the radical polymerization, living radical polymerization or radical polymerization using a chain transfer agent is preferred, and the former is particularly preferred.

Radical polymerization processes used for producing the component (A) are classified into a general radical polymerization process in which a monomer having a specified functional group and a vinyl monomer are simply copolymerized using an azo compound, a peroxide, or the like as a polymerization initiator, and a controlled radial polymerization process in which a specified functional group can be introduced at a controlled position such as a terminus or the like.

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer having the functional group at a terminus, and a living radical polymerization process in which polymerization propagation termini propagate without causing termination reaction to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling or the like. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943; a process using a radical scavenger such as a nitroxide compound, as shown in Macromolecules, 1994, vol. 27, p. 7228; and an atom transfer radical polymerization (ATRP) process using an organic halide or the like as an initiator and a transition metal complex as a catalyst.

Among these living radical polymerization processes, the atom transfer radical polymerization process in which a vinyl monomer is polymerized using an organic halide or a halogenated sulfonyl compound as an initiator and a transition metal complex as a catalyst has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl polymer having a specified functional group.

Examples of the atom transfer radical polymerization process include the processes disclosed in Matyjaszewski, et al., Journal of American Chemical Society (J. Am. Chem. Soc.), 1995, vol. 117, p. 5614; Macromolecules, 1995, vol. 28, p. 7901; Science, 1996, vol. 272, p. 866; WO96/30421 and WO97/18247; and Sawamoto, et al., Macromolecules, 1995, vol. 28, p. 1721.

In the present invention, any one of these processes may be used without limitation, but the controlled radical polymerization is basically used, and the living radical polymerization is more preferred from the viewpoint of easy control. The atom transfer radical polymerization process is particularly preferred.

First, the controlled radical polymerization process using a chain transfer agent will be described.

The radical polymerization process using the chain transfer agent (telomer) is not particularly limited, but examples of a process for producing a vinyl polymer having a terminal structure suitable for the present invention include the following two processes:

A process for producing a halogen-terminated polymer using a halogenated hydrocarbon as the chain transfer agent as disclosed in Japanese Kokai Publication Hei-04-132706, and a method for producing a hydroxyl group-terminated polymer using a hydroxyl group-containing mercaptane or a hydroxyl group-containing polysulfide or the like as the chain transfer agent as disclosed in Japanese Kokai Publication Sho-61-271306, Japanese Patent Publication No. 2594402, and Japanese Kokai Publication Sho-54-47782.

Next, the living radical polymerization will be described.

First, the process using a nitroxide compound as the radical scavenger (capping agent) will be described.

This polymerization process generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable.

Specific examples of a nitroxy free radical compound include, but not particularly limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N,N-di-tert-butylaminoxy radical.

Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer.

The ratio between both agents used is not particularly limited, but the amount of the radical initiator is preferably 0.1 to 10 moles per mole of the radical capping agent.

As a radical generator, any one of various compounds can be used, but a peroxide capable of generating radical under a polymerization temperature is preferred.

Examples of the peroxide include, but not particularly limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl) peroxydicarbonate; and alkyl peresters, such as tert-butyl peroxyoctoate and tert-butyl peroxybenzoate. In particular, benzoyl peroxide is preferred.

Instead of the peroxide, a radical generator such as a radical generating azo compound, e.g., azobisisobutyronitrile, may be used.

As reported in Macromolecules, 1995, 28, 2993, the alkoxyamine compound shown below may be used as the initiator instead of a combination of the radical capping agent and the radical generator.

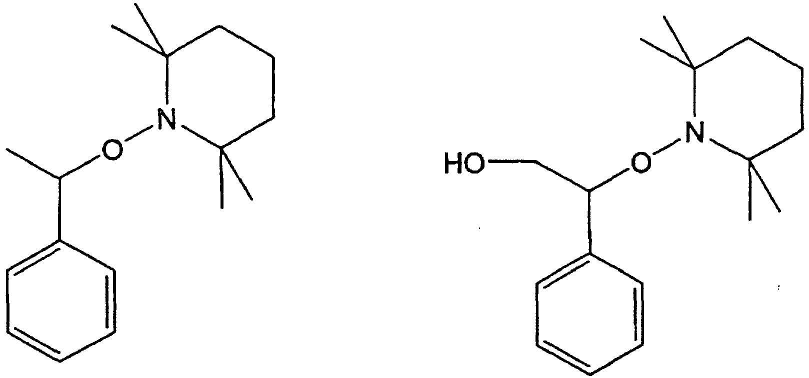

When the alkoxyamine compound is used as the initiator, the use of a compound having a functional group such as a hydroxyl group as mentioned above produces a polymer having the functional group at a terminus. When this compound is used in the method of the present invention, a polymer having the functional group at a terminus is produced.

The conditions of polymerization using the nitroxide compound as the radical scavenger, such as the monomer, the solvent, the polymerization temperature, and the like, are not particularly limited. However, these conditions may be the same as those in atom transfer radical polymerization which will be described below.

Next, the atom transfer radical polymerization suitable as the living radical polymerization of the present invention will be described.

The atom transfer radical polymerization uses, as the initiator, an organic halide, particularly an organic halide having a highly reactive carbon-halogen bond (e.g., a carbonyl compound having a halogen at an α-position, or a compound having a halogen at a benzyl position), or a halogenated sulfonyl compound.

Specific examples of such a compound include the following:
C₆H₅-CH₂X, C₆H₅-C(H)(X)CH₃, and C₆H₅-C(X) (CH₃)₂
   (wherein C₆H₅ is a phenyl group, X is a chlorine atom, a bromine atom, or an iodine atom);
   R⁷-C(H(X)-CO₂R⁸, R⁷-C(CH₃)(X)-CO₂R⁸, R⁷-C(H)(X)-C(O)R⁸, and F⁷-C(CH₃)(X)-C(O)R⁸
   (wherein R⁷ and R⁸ are each a hydrogen atom or an alkyl group having 1 to 20 carbon atoms, an aryl group having 6 to 20 carbon atoms, or an aralkyl group having 7 to 20 carbon atoms; X is a chlorine atom, a bromine atom, or an iodine atom); and
   R⁷-C₆H₄-SO₂X
   (wherein R⁷ is a hydrogen atom or an alkyl group having 1 to 20 carbon atoms, an aryl group having 6 to 20 carbon atoms, or an aralkyl group having 7 to 20 carbon atoms; X is a chlorine atom, a bromine atom, or an iodine atom).

As the initiator of the atom transfer radical polymerization, an organic halide or halogenated sulfonyl compound having a functional group other than a functional group which initiates polymerization can be used. In this case, the resultant vinyl polymer has the functional group at one of the main chain termini and a structure represented by the general formula (1) at the other terminus.

Examples of the functional group include alkenyl, crosslinkable silyl, hydroxyl, epoxy, amino, and amido.

Examples of the organic halide having an alkenyl group include, but not limited to, compounds having the structure represented by the general formula (9):

R¹⁰R¹¹C(X)-R¹²-R¹³-C(R⁹)=CH₂ (9)

(wherein R⁹ is a hydrogen atom or a methyl group; R¹⁰ and R¹¹ are each a hydrogen atom, an alkyl group having 1 to 20 carbon atoms, an aryl group having 6 to 20 carbon atoms, or an aralkyl group having 7 to 20 carbon atoms, or R¹⁰ and R¹¹ are bonded together at the other termini; R¹² is -C(O)O- (ester group), -C(O)- (keto group), or an o-, m-, or p-phenylene group; R¹³ is a direct bond or a divalent organic group having 1 to 20 carbon atoms, which may contain at least one ether bond; and X is a chlorine atom, a bromine atom, or an iodine atom).

Specific examples of substituents R¹⁰ and R¹¹ include a hydrogen atom, methyl, ethyl, n-propyl, isopropyl, butyl, pentyl, and hexyl. Substituents R¹⁰ and R¹¹ may be bonded together at the other termini to form a cyclic skeleton.

Examples of divalent organic group R¹³ having 1 to 20 carbon atoms, which may contain at least one ether bond, include alkylene having to 20 carbon atoms, which may contain at least one ether bond.

Specific examples of an alkenyl group-containing organic halide represented by the general formula (9) include the following:

XCH₂C(O)O(CH₂)ₙCH=CH₂,

H₃CC(H)(X)C(O)O(CH₂)ₙCH=CH₂,

(H₃C)₂C(X)C(O)O(CH₂)ₙCH=CH₂,

CH₃CH₂C(H)(X)C(O)O(CH₂)ₙCH=CH₂,

and 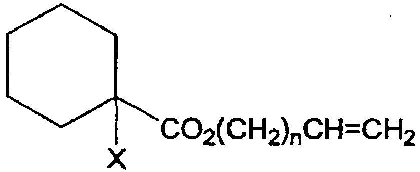 (wherein X is a chlorine atom, a bromine atom, or an iodine atom, and n is an integer of 0 to 20);

XCH₂C(O)O(CH₂)ₙO(CH₂)ₘCH=CH₂,

H₃CC(H)(X)C(O)O(CH₂)ₙO(CH₂)ₘCH=CH₂,

(H₃C)₂C(X)C(O)O(CH₂)ₙO(CH₂)ₘCH=CH₂,

CH₃CH₂C(H)(X)C(O)O(CH₂)ₙO(CH₂)ₘCH=CH₂,

and 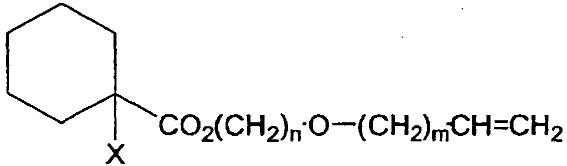 (wherein X is a chlorine atom, a bromine atom, or an iodine atom, n is an integer of 1 to 20, and m is an integer of 0 to 20);

o, m, p-XCH₂=C₆H₄-(CH₂)ₙ-CH==CH₂,

o, m, p-CH₃C(H)(X)-C₆H₄-(CH₂)ₙ-CH=CH₂,

and

o, m, p-CH₃CH₂C(H)(X)-C₆H₄-(CH₂)ₙ-CH=CH₂

(wherein X is a chlorine atom, a bromine atom, or an iodine atom, and n is an integer of 0 to 20);

o, m, p-XCH₂-C₆H₄-(CH₂)ₙ-O-(CH₂)ₘ-CH=CH₂,

o, m, p-CH₃C(H)(X)-C₆H₄-(CH₂)ₙ-O-(CH₂)ₘ-CH=CH₂,

and

o, m, p-CH₃CH₂C(H)(X)-C₆H₄-(CH₂)ₙ-O-(CH₂)ₙCH=CH₂

(wherein X is a chlorine atom, a bromine atom, or an iodine atom, n is an integer of 1 to 20, and m is an integer of 0 to 20);

o, m, p-XCH₂-C₆H₄-O-(CH₂)ₙ-CH=CH₂,

o, m, p-CH₃C(H)(X)-C₆H₄-O-(CH₂)ₙ-CH=CH₂,

and

o, m, p-CH₃CH₂C(H)(X)-C₆H₄-O-(CH₂)ₙ-CH=CH₂

(wherein X is a chlorine atom, a bromine atom, or an iodine atom, and n is an integer of 0 to 20); and

o, m, p-XCH₂-C₆H₄-O-(CH₂)ₙ-O-(CH₂)ₘ-CH=CH₂,

o, m, p-CH₃C(H)(X)-C₆H₄O-(CH₂)ₙ-O-(CH₂)ₘ-CH=CH₂,

and

o, m, p-CH₃CH₂C(H)(X)-C₆H₄-O-(CH₂)ₙ-O-(CH₂)ₘ-CH=CH₂

(wherein X is a chlorine atom, a bromine atom, or an iodine atom, n is an integer of 1 to 20, and m is an integer of 0 to 20).

Other examples of an organic halide having an alkenyl group include compounds represented by the general formula (10) :

H₂C=C(R⁹)-R¹³-C(R¹⁰)(X)-R¹⁴-R¹¹ (10)

(wherein R⁹, R¹⁰, R¹¹, R¹³, and X represent the same as the above, and R¹⁴ represents a direct bond or -C(O)O- (ester group), -C(O)-(keto group), or an o-, m-, or p-phenylene group).

R¹³ is a direct bond or a divalent organic group having 1 to 20 carbon atoms (which may contain at least one ether bond) . When R⁹ is a direct bond, the compound is a halogenated allyl compound in which a vinyl group is bonded to the carbon bonded to a halogen atom. In this case, the carbon-halogen bond is activated by the adjacent vinyl group, and thus a C(O)O or phenylene group is not necessarily required as R¹⁴, and a direct bond may be present. When R¹³ is not a direct bond, R¹⁴ is preferably a C(O)O, C(O), or phenylene group for activating the carbon-halogen bond.

Specific examples of the compounds represented by the general formula (10) include the following:

CH₂=CHCH₂X, CH₂=C(CH₃)CH₂X, CH₂=CHC(H)(X)CH₃,

CH₂=C(CH₃)C(H)(X)CH₃, CH₂=CHC(X)(CH₃)₂, CH₂=CHC(H)(X)C₂H₅,

CH₂=CHC(H)(X)CH(CH₃)₂, CH₂=CHC(H)(X)C₆H₅, CH₂=CHC(H)(X)CH₂C₆H₅,

CH₂=CHCH₂C(H)(X)-CO₂R, CH₂=CH(CH₂)₂C(H)(X)-CO₂R,

CH₂=CH(CH₂)₃C(H)(X)-CO₂R, CH₂=CH(CH₂)₈C(H)(X)-CO₂R,

CH₂=CHCH₂C(H)(X)-C₆H₅, CH₂=CH(CH₂)C(H)(X)-C₆H₅, and

CH₂=CH(CH₂)₃C(H)(X)-C₆H₅

(wherein X is a chlorine atom, a bromine atom, or an iodine atom, and R is an alkyl, aryl, or aralkyl having 1 to 20 carbon atoms) .

Specific examples of the halogenated sulfonyl compound having an alkenyl group include the following: o-, m-, p-CH₂=CH-(CH₂)ₙ-C₆H₄-SO₂X, and
o-, m-, p-CH₂=CH-(CH₂)ₙ-O-C₆H₄-SO₂X
(wherein X is a chlorine atom, a bromine atom, or an iodine atom, and n is an integer of 0 to 20).

Specific examples of the organic halide having a crosslinkable silyl group include, but not limited to, compounds with a structure represented by the general formula (11) :

R¹⁰R¹¹C(X)-R¹²-R¹³-C(H)(R⁹)CH₂-[Si(R¹⁵)_{2-b}(Y)_{b}O]ₘ-Si(R¹⁶)₃₋ₐ(Y)ₐ (11)

(wherein R⁹, R¹⁰, R¹¹, R¹², R¹³, and X represent the same as the above, and R¹⁵ and R¹⁶ each represent alkyl, aryl, or aralkyl having 1 to 20 carbon atoms, or a triorganosiloxy group represented by (R')₃SiO- (the three R's are each a monovalent hydrocarbon group having 1 to 20 carbon atoms and may be the same or different); when two or more groups R¹⁵ or R¹⁶ are present, they may be the same or different; Y represents a hydroxyl group or a hydrolyzable group, and when two or more groups Y are present, they may be the same or different; a represents 0, 1, 2, or 3; b represents 0, 1, or 2; m represents an integer of 0 to 19; and a + mb ≥1 is satisfied).

Specific examples of the compounds represented by the general formula (11) include the following

XCH₂C(O)O(CH₂)ₙSi(OCH₃)₃,

CH₃(H)(X)C(O)O(CH₂)ₙSi(OCH₃),

(CH₃)₂C(X)C(O)O(CH₂)ₙSi(OCH₃)₃,

XCH₂C(O)O(CH₂)ₙSi(CH₃)(OCH₃)₂,

CH₃C(H)(X)C(O)O(CH₂)ₙSi(CH₃)(OCH₃)₂,

and

(CH₃)₂C(X)C(O)O(CH₂)ₙSi(CH₃)(OCH₃)₂

(wherein X is a chlorine atom, a bromine atom, or an iodine atom, and n is an integer of 0 to 20);

XCH₂C(O)O(CH₂)ₙO(CH₂)ₘSi(OCH₃)₃,

H₃CC(H)(X)C(O)O(CH₂)ₙO(CH₂)ₘSi(OCH₃)₃,

(H₃C)₂C(X)C(O)O(CH₂)ₙO(CH₂)ₘSi(OCH₃)₃,

CH₃CH₂C(H)(X)C(O)O(CH₂)ₙO(CH₂)ₘSi(OCH₃)₃,

XCH₂C(O)O(CH₂)ₙO(CH₂)ₘSi(CH₃)(OCH₃)₂,

H₃CC(H)(X)C(O)O(CH₂)ₙO(CH₂)ₘ-Si(CH₃)(OCH₃)₂,

(H₃C)₂C(X)C(O)O(CH₂)ₙO(CH₂)ₘ-Si(CH₃)(OCH₃)₂,

and

CH₃CH₂C(H)(X)C(O)O(CH₂)ₙO(CH₂)ₘ-Si(CH₃)(OCH₃)₂,

(wherein X is a chlorine atom, a bromine atom, or an iodine atom, n is an integer of 1 to 20, and m is an integer of 0 to 20); and

o, m, p-XCH₂-C₆H₄-(CH₂)₂Si(OCH₃)₃,

o, m, p-CH₃C(H)(X)-C₆H₄-(CH₂)₂Si(OCH₃)₃,

o, m, p-CH₃CH₂C(H) (X)-C₆H₄-(CH₂)₂Si(OCH₃)₃,

o, m, p-XCH₂-C₆H₄-(CH₂)₃Si(OCH₃)₃,

o, m, p-CH₃C(H)(X)-C₆H₄-(CH₂)₃Si(OCH₃)₃,

o, m, p-CH₃CH₂-C(H)(X)-C₆H₄-(CH₂)₃Si(OCH₃)₃,

o, m, p-XCH₂-C₆H₄-(CH₂)₂-O-(CH₂)₃Si(OCH₃)₃,

o, m, p-CH₃C(H)(X)-C₆H₄-(CH₂)₂-O-(CH₂)₃Si(OCH₃)₃,

o, m, p-CH₂CH₂C(H)(X)-C₆H₄-(CH₂)₂-O-(CH₂)₃Si(OCH₃)₃,

o, m, p-XCH₂-C₆H₄-O-(CH₂)₃Si(OCH₃)₃,

o, m, p-CH₃C(H)(X)-C₆H₄-O-(CH₂)₃Si(OCH₃)₃,

o, m, p-CH₃CH₂C(H)(X)-C₆H₄-O-(CH₂)₃-Si(OCH₃)₃,

o, m, p-XCH₂-C₆H₄-O-(CH₂)₂-O-(CH₂)₃-Si(OCH₃)₃,

o, m, p-CH₃C(H)(X)-C₆H₄-O-(CH₂)₂-O-(CH₂)₃Si(OCH₃)₃,

and

o, m, p-(CH₃CH₂C(H)(X)-C₆H₄-O-(CH₂)₂-O-(CH₂)₃Si(OCH₃)₃

(wherein X is a chlorine atom, a bromine atom, or an iodine atom).

Other examples of the organic halide having a crosslinkable silyl group include compounds with a structure represented by the general formula (12):

(R¹⁶)₃₋ₐ(Y)ₐSi-[OSi(R¹⁵)_{2-b}(Y)_{b}]ₘ-CH₂-C(H)(R⁹)-R¹³-C(R¹⁰)(X)-R¹⁴-R ¹¹ (12)

(wherein R⁹, R¹⁰, R¹¹, R¹³, R¹⁴, R¹⁵, R¹⁶, a, b, X and Y represent the same as the above, and m is an integer of 0 to 19).

Specific examples of the compounds represented by the general formula (12) include the following:

(CH₃O)₃SiCH₂CH₂C(H)(X)C₆H₅,

(CH₃O)₂(CH₃)SiCH₂CH₂C(H)(X)C₆H₅,

(CH₃O)₃Si(CH₂)₂C(H)(X)-CO₂R,

(CH₃O)₂(CH₃)Si(CH₂)₂C(H)(X)-CO₂R,

(CH₃O)₃Si(CH₂)₃C(H)(X)-CO₂R,

(CH₃O)₂(CH₃)Si(CH₂)₃C(H)(X)-CO₂R,

(CH₃O)₃Si(CH₂)₄C(H)(X)-CO₂R,

(CH₃O)₂(CH₃)Si(CH₂)₄C(H)(X)-CO₂R,

(CH₃O)₃Si(CH₂)₉C(H)(X)-CO₂R,

(CH₃O)₂(CH₃)Si(CH₂)₉C(H)(X)-CO₂R,

(CH₃O)₃Si(CH₂)₃C(H)(X)-C₆H₅,

(CH₃O)(CH₃)Si(CH₂)₃C(H)(X)-C₆H₅,

(CH₃O)₃Si(CH₂)₄C(H)(X)-C₆H₅, and

(CH₃O)₂(CH₃)Si(CH₂)₄C(H)(X)-C₆H₅

(wherein X is a chlorine atom, a bromine atom, or an iodine atom, and R is alkyl, aryl, or aralkyl having 1 to 20 carbon atoms) .

Examples of the hydroxyl group-containing organic halide or halogenated sulfonyl compound include, but not limited to, the following:

HO-(CH₂)ₙ-OC(O)C(H)(R) (X)

(wherein X is a chlorine atom, a bromine atom, or an iodine atom, R is a hydrogen atom or alkyl, aryl, or aralkyl having 1 to 20 carbon atoms, and n is an integer of 1 to 20).

Examples of the amino group-containing organic halide or halogenated sulfonyl compound include, but not limited to, the following:

H₂N-(CH₂)ₙ-OC(O)C(H)(R) (X)

(wherein X is a chlorine atom, a bromine atom, or an iodine atom, R is a hydrogen atom or alkyl, aryl, or aralkyl having 1 to 20 carbon atoms, and n is an integer of 1 to 20).

Examples of the epoxy group-containing organic halide or halogenated sulfonyl compound include, but not limited to, the following: 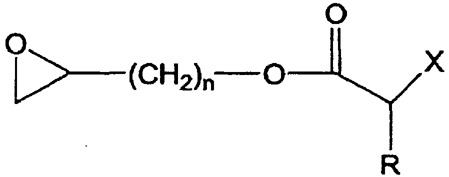 (wherein X is a chlorine atom, a bromine atom, or an iodine atom, R is a hydrogen atom or alkyl, aryl, or aralkyl having 1 to 20 carbon atoms, and n is an integer of 1 to 20).

In order to obtain a vinyl polymer having at least two terminal groups represented by the general formula (1) per molecule, an organic halide or halogenated sulfonyl compound having at least two initiation points is preferably used as the initiator. Examples of such a compound include the following:

**o,m,p-X-CH₂-C₆H₄-CH₂-X**

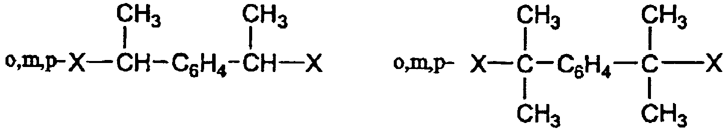

(wherein C₆H₄ is a phenylene group, and X is chlorine, bromine, or iodine.) 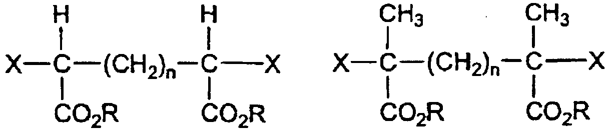 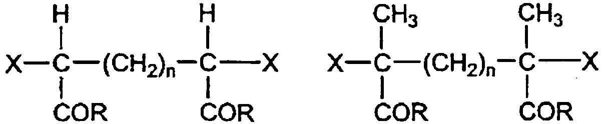 (wherein R is an alkyl, aryl, or aralkyl group having 1 to 20 carbon atoms, n is an integer of 0 to 20, and X is chlorine, bromine, or iodine.) 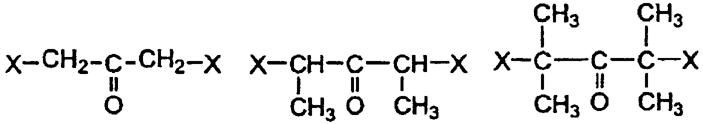 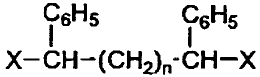 (wherein X is chlorine, bromine, or iodine, and n is an integer of 0 to 20.) 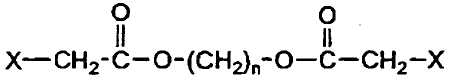 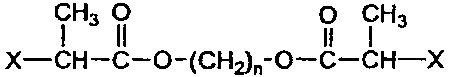 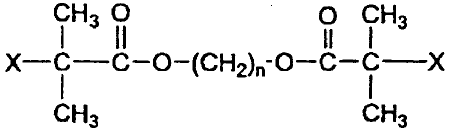 (wherein n is an integer of to 20, and X is chlorine, bromine, or iodine.)

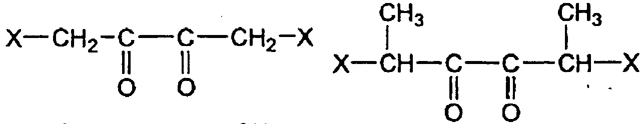

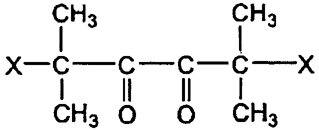

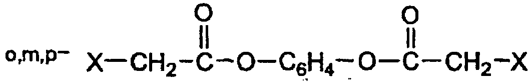

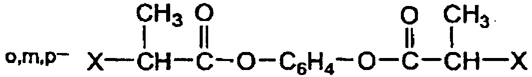

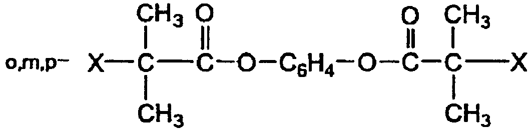

**o,m,p⁻ X-SO₂-C₆H₄-SO₂-X**

(wherein X is chlorine, bromine, or iodine.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal, for example, a complex composed of copper, nickel, ruthenium, or iron, is preferred. A complex of zero-valent copper, monovalent copper, divalent ruthenium, divalent iron, or divalent nickel is more preferred. Among these complexes, a copper complex is most preferred.

Specific examples of the monovalent copper compound include cuprous chloride, cuprous bromide, cuprous iodide, cuprous cyanide, cuprous oxide, and cuprous perchlorate.

When a copper compound is used, a ligand, such as 2,2'-bipyridyl or its derivative, 1,10-phenanthroline or its derivative, or polyamine, e.g., tetramethylethylenediamine, pentamethyldiethylenetriamine, or hexamethyl tris (2-aminoethyl) amine, can be added for increasing catalyst activity.

Also, a tristriphenylphosphine complex (RuCl₂(PPh₃)₃) of divalent ruthenium chloride is suitable as the catalyst.

When a ruthenium compound is used, an aluminum alkoxide may be added as an activator.

Furthermore, a bistriphenylphosphine complex (FeCl₂(PPh₃)₂) of divalent iron, a bistriphenylphosphine complex (NiCl₂(PPh₃)₂) of divalent nickel, or a bistributylphosphine complex (NiBr₂(PBu₃)₂) of divalent nickel is preferred as the catalyst.

The polymerization can be performed without a solvent or in any of various solvents.

Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more.

The polymerization can be performed in a range of room temperature to 200°C, and preferably 50°C to 150°C.

### <Introduction of functional group>

The process for producing the component (A) is not particularly limited, but polymer (I) can be produced by, for example, preparing a vinyl polymer having a reactive functional group by the above-described method, and then substituting the reactive functional group with a substituent having a (meth)acryloyloxy group.

The conversion of a terminal group of a vinyl polymer having a reactive functional group to a group represented by the general formula (1) will be described below.

The process for introducing a (meth) acryloyloxy group to a terminus of the vinyl polymer is not particularly limited, but the following process can be used, for example:
(Introduction process 1) Process of reacting a vinyl polymer having a halogen group at a terminus with a compound represented by the general formula (5):

   M⁺⁻OC(O)C(R^{a})=CH₂ (5)

   (wherein R^{a} represents hydrogen or an organic group having 1 to 20 carbon atoms, and M⁺ represents an alkali metal ion or quaternary ammonium ion).
   As the vinyl polymer having a halogen group at a terminus, a polymer having a terminal group represented by the general formula (6) is preferred:

   -CR⁵R⁶X (6)

   (wherein R⁵ and R⁶ each represent a group bonded to an ethylenically unsaturated group of a vinyl monomer, and X represents a chlorine atom, a bromine atom, or an iodine atom).
(Introduction process 2) Process of reacting a vinyl polymer having a hydroxyl group at a terminus with a compound represented by the general formula (7):

   X¹C(O)C(R^{a})=CH₂ (7)

   (wherein R³ represents a hydrogen atom or an organic group having 1 to 20 carbon atoms, and X¹ represents a chlorine atom, a bromine atom, or a hydroxyl group).
(Introduction process 3) Process of reacting a vinyl polymer having a hydroxyl group at a terminus with a diisocyanate compound and then reacting the residual isocyanate group with a compound represented by the general formula (8):

   HO-R'-OC(O)C(R^{a})=CH₂ (8)

   (wherein R^{a} represents a hydrogen atom or an organic group having 1 to 20 carbon atoms, and R' represents a divalent organic group having 2 =0 20 carbon atoms).

Each of these processes will be described in detail below.

### <Introduction process 1>

Introduction process 1 includes reacting a vinyl polymer having a halogen group at a terminus with a compound represented by the general formula (5).

Although the vinyl polymer having a halogen group at a terminus is not particularly limited, a polymer having a terminal group represented by the general formula (6).

As the groups represented by R⁵ and R⁶ in the general formula (6) and bound to the ethylenically unsaturated bond of the vinyl monomer, there may be mentioned a hydrogen atom and such groups as methyl, carbonyl, carboxylate, toluyl, fluoro, chloro, trialkoxysilyl, phenylsulfonic acid, carboxylic acid imide and cyano groups.

The vinyl polymer having a halogen group at a terminus, particularly the vinyl polymer having the terminal group represented by the general formula (6), can be produced by a process of polymerizing a vinyl monomer using the organic halide or halogenated sulfonyl compound as the initiator and the transition metal complex as the catalyst, or a process of polymerizing a vinyl monomer using a halide as the chain transfer agent. However, the former process is preferred.

The compound represented by the general formula (5) is not particularly limited.

Organic group R^{a} having 1 to 20 carbon atoms, which is in the general formula (5), is exemplified by the same as the above, and specific examples of R^{a} include those exemplified by the same as the above.

M' in the general formula (5) is a counter cation of oxyanion, and examples of these include an alkali metal ion, a quaternary ammonium ion, and the like.

Examples of the alkali metal ion include lithium ion, sodium ion, and potassium ion. Examples of a quaternary ammonium ion include tetramethylammonium ion, tetraethylammonium ion, tetrabenzylammonium ion, trimethyldodecylammonium ion, tetrabutylammonium ion, and dimethylpiperidiniuum ion. Among these, there may be mentioned preferably an alkali metal ion, and more preferably sodium ion or potassium ion.

The compound represented by the general formula (5) is preferably used in an amount of 1 to 5 equivalents and more preferably 1.0 to 1. 2 equivalents relative to the terminal group represented by the general formula (6).

The solvent used for carrying out the reaction is not particularly limited, but a polar solvent is preferred because the reaction is nucleophilic substitution reaction. Preferably used are tetrahydrofuran, dioxane, diethyl ether, acetone, dimethylsulfoxide, dimethylformamide, dimethylacetamide, hexamethylphosphoric triamide, and acetonitrile, etc.

The reaction temperature is not particularly limited, but it is preferably 0 to 150°C and more preferably 10°C to 100°C.

### <Introduction process 2>

Introduction process 2 includes reacting a vinyl polymer having a hydroxyl group at a terminus with a compound represented by the general formula (7).

The compound represented by the general formula (7) is not particularly limited.

Organic group R^{a} having 1 to 20 carbon atoms, which is in the general formula (7), is exemplified by the same as the above, and specific examples of R^{a} include those exemplified by the same as the above.

The vinyl polymer having a hydroxyl group at a terminus can be produced by a process of polymerizing a vinyl monomer using the organic halide or halogenated sulfonyl compound as the initiator and the transition metal complex as the catalyst, or a process of polymerizing a vinyl monomer using a hydroxyl group-containing compound as the chain transfer agent. However, the former process is preferred.

The process for producing the vinyl polymer having a hydroxyl group at a terminus is not particularly limited, but examples of the process include the following, for example:
(a) A process of reacting a second monomer such as a compound having both a polymerizable alkenyl group and a hydroxyl group in its molecule represented by the general formula (13) below in living radical polymerization for synthesizing a vinyl polymer.

   H₂C=C(R¹⁷)-R¹⁸-R¹⁹-OH (13)

   (wherein R¹⁷ represents a hydrogen atom or an organic group having 1 to 20 carbon atoms, R¹⁸ represents -C (O)O- (ester group) or an o-, m-, or p-phenylene group, and R¹⁹ represents a direct bond or a divalent organic group having 1 to 20 carbon atoms, which may contain at least one ether bond).
   In the formula, R¹⁷ is preferably a hydrogen atom or a methyl group. The compound having an ester group as R¹⁸ is a (meth)acrylate compound, and the compound having a phenylene group as R¹⁸ is a styrene compound.
   The time to react the compound having both a polymerizable alkenyl group and a hydroxyl group in its molecule is not particularly limited. However, particularly when rubber properties are expected, the second monomer is preferably reacted at the final stage of polymerization reaction or after the completion of reaction of a predetermined monomer.
(b) A process of reacting a second monomer such as a compound having both a low-polymerizable alkenyl group and a hydroxyl group in its molecule at the final stage of polymerization reaction or after the completion of reaction of a predetermined monomer in living radical polymerization for synthesizing a vinyl polymer.
   The compound is not particularly limited, but a compound represented by the general formula (14) or the like can be used.

   H₂C=C(R¹⁷)-R²⁰-OH (14)

   (wherein R¹⁷ represent the same as the above, and R²⁰ represents a divalent organic group having 1 to 20 carbon atoms, which may contain at least one ether bond).
   The compound represented by the general formula (14) is not particularly limited, but an alkenyl alcohol, such as 10-undecenol, 5-hexenol, or allyl alcohol, is preferred from the viewpoint of easy availability.
(c) A process of introducing a terminal hydroxyl group by hydrolysis of a carbon-halogen bond represented by the general formula (6) or by reacting a hydroxyl group-containing compound with a halogen of a vinyl polymer having at least one carbon-halogen bond represented by the general formula (6), which is produced by atom transfer radical polymerization, as disclosed in Japanese Kokai Publication Hei-04-132706.
(d) A process of introducing a halogen by reacting a vinyl polymer having at least one carbon-halogen bond represented by the general formula (6) and produced by atom transfer radical polymerization with, for example, a stabilized carbanion represented by the general formula (15) having a hydroxyl group.

   M⁺C⁻(R²¹)(R²²)-R²⁰-OH (15)

   (wherein R²⁰ and M⁺ represent the same as the above, and R²¹ and R²² each represent an electrophilic group capable of stabilizing carbanion C⁻ or one of R¹⁷ and R¹⁸ represents an electrophilic group, the other representing a hydrogen atom or an alkyl or phenyl group having 1 to 10 carbon atoms).
   Examples of the electrophilic group include -CO₂R (ester group), -C(O)R (keto group), -CON(R₂) (amido group), -COSR (thioester group), -CN (nitrile group) and -NO₂ (nitro group), and particularly preferred are -CO₂R, -C(O)R, and -CN. Substituent R is an alkyl group having 1 to 20 carbon atoms, an aryl group having 6 to 20 carbon atoms, or an aralkyl group having 7 to 20 carbon atoms, and preferably an alkyl or phenyl group having 1 to 10 carbon atoms.
(e) A process of reacting a vinyl polymer having at least one carbon-halogen bond represented by the general formula (6) and produced by atom transfer radical polymerization with an elemental metal, such as zinc, or an organometallic compound to prepare an enolate anion, and then reacting the anion and an aldehyde or ketone.
(f) A process of reacting a vinyl polymer having at least one terminal halogen, preferably at least one carbon-halogen bond represented by the general formula (6), with a hydroxyl group-containing compound represented by the general formula (16) or the like, or with a hydroxyl group-containing compound represented by the general formula (17) or the like to substitute the halogen atom with a hydroxyl group-containing substituent.

   HO-R²⁰-O⁻M⁺ (16)

   (wherein R²⁰ and M⁺ represent the same as the above.)

   HO-R²⁰-C(O)O⁻M⁺ (17)

   (wherein R²⁰ and M⁺ represent the same as the above.)

Among processes (a) and (b) for introducing a hydroxyl group without directly involving a halogen atom, process (b) is more preferred from the viewpoint of ease of control.

Among processes (c) to (f) for introducing a hydroxyl group by converting the halogen atom of the vinyl polymer having at least one carbon-halogen bond, process (f) is more preferred from the viewpoint of ease of control.

The compound represented by the general formula (7) is preferably used in an amount of 1 to 10 equivalents and more preferably 1 to 5 equivalents relative to the terminal hydroxyl group of the vinyl polymer.

The solvent used for carrying out the reaction is not particularly limited, but a polar solvent is preferred because the reaction is nucleophilic substitution reaction. Preferably used are tetrahydrofuran, dioxane, diethyl ether, acetone, dimethylsulfoxide, dimethylformamide, dimethylacetamide, hexamethylphosphoric triamide, and acetonitrile, etc.

The reaction temperature is not particularly limited, but it is preferably 0 to 150°C and more preferably 10 to 100°C.

### <Introduction process 3>

Introduction process 3 includes reacting a vinyl polymer having a hydroxyl group at a terminus and a diisocyanate compound and then reacting the residual isocyanate group with a compound represented by the general formula (8):

HO-R'-OC(O)C(R^{a})=CH₂ (8)

(wherein R^{a} represents a hydrogen atom or an organic group having 1 to 20 carbon atoms, and R' represents a divalent organic group having 2 to 20 carbon atoms).

Organic group R^{a} having 1 to 20 carbon atoms, which is in the general formula (8), is exemplified by the same as the above, and specific examples of R^{a} include those exemplified by the same as the above.

As divalent organic group R' having 2 to 20 carbon atoms, which is represented by the general formula (8), for example, an alkylene group (ethylene, propylene, butylenes, or the like) having 2 to 20 carbon atoms, an arylene group having 6 to 20 carbon atoms, an aralkylene group having 7 to 20 carbon atoms, or the like can be used.

The compound represented by the general formula (8) is not particularly limited, but 2-hydroxypropyl methacrylate or the like is particularly preferred.

The vinyl polymer having a hydroxyl group at a terminus is as described above.

The diisocyanate compound is not particularly limited, and any known compound can be used. Specific examples of the compound include toluylene diisocyanate, 4,4'-diphenylmethane diisocyanate, hexamethylene diisocyanate, xylylene diisocyanate, metaxylylene diisocyanate, 1,5-naphthalene diisocyanate, hydrogenated diphenylmethane diisocyanate, hydrogenated toluylene diisocyanate, hydrogenated xylylene diisocyanate, and isophorone diisocyanate. These compounds can be used alone or in combination of two or more. Also, a block isocyanate may be used. In order to achieve higher weather resistance, a diisocyanate compound with no aromatic ring, such as hexamethylene diisocyanate or hydrogenated diphenylmethane diisocyanate, is preferably used.

The amount of the diisocyanate compound used is preferably 1 to 10 equivalents and more preferably 1 to 5 equivalents relative to the terminal hydroxyl group of the vinyl polymer.

The amount of the compound represented by the general formula (8) to be used is preferably 1 to 10 equivalents and more preferably 1 to 5 equivalents relative to the remaining isocyanate group.

The reaction solvent is not particularly limited, but an aprotic solvent is preferred.

The reaction temperature is not particularly limited, but it is preferably 0 to 250°C and more preferably 20 to 200°C.

### <<Component (B)>>

Component (B) is at least one acylphosphine oxide photopolymerization initiator represented by the general formula (2):

R¹R²P(=O)C(=O)R³ (2)

[wherein R¹ represents C₁₋₁₂ alkyl, benzyl, phenyl which may optionally be substituted, cyclohexyl, -COR³, -OR⁴ (R⁴ representing C₁₋₈ alkyl, phenyl or benzyl) or a group represented by the general formula (3):

-A-(R²)P(=O)C(=O)R³ (3)

(A representing C₁₋₁₈ alkylene, phenylene or biphenylene);
R² represents C₁₋₁₂ alkyl, benzyl, phenyl which may optionally be substituted, cyclohexyl or -COR³; and
R³ represents phenyl which may optionally be substituted, or a group represented by the general formula (4):

-B-C(=O)P(=O)R¹R² (4)

(B representing C₁₋₁₂ alkylene, cyclohexylene or phenylene)].

As the C₁₋₁₂ alkyl represented by R¹ and/or R², there may be mentioned methyl, ethyl, propyl, butyl, pentyl, hexyl, heptyl, octyl, nonyl, decyl, undecyl, dodecyl, etc.

The C₁₋₈ alkyl represented by R⁴ includes those containing 1 to 8 carbon atoms among the alkyl groups enumerated above.

As regards R¹, R² and/or R³, the phenyl which may optionally be substituted includes unsubstituted phenyl; and phenyl substituted by one to four halogen atoms and/or C₁₋₈ alkyl and/or C₁₋₈ alkoxy groups, among others. As the halogen, there may be mentioned fluorine, chlorine, bromine and iodine atoms. As the C₁₋₈ alkoxy, there may be mentioned methoxy, ethoxy, propoxy, butoxy, hexyloxy, octyloxy, etc.

As the C₁₋₁₈ alkylene represented by A, there may be mentioned methylene, ethylene, propylene, butylene, pentylene, hexylene, heptylene, octylene, nonylene, decylene, tetradecylene, octadecylene, etc.

The C₁₋₁₂ alkylene represented by B includes those containing 1 to 12 carbon atoms among the alkylene groups enumerated above.

The component (B) acylphosphine oxide photopolymerization initiator is not particularly restricted but any of various ones represented by the above formula (2) can be used. Examples are 2,4,6-trimethylbenzoyldiphenylphopshine oxide, bis(2,4,6-tri-methylbenzoyl)phenylphosphine oxide, bis(2,6-dimethoxybenzoyl)-2,4,4-trimethylpentylphosphine oxide, bis(2,6-dimethylbenzoyl)-phenylphosphine oxide, bis(2,4,6-trimethylbenzoyl)isobutyl-phosphine oxide, bis(2,6-dimethoxybenzoyl)isobutylphosphine oxide, bis(2,6-dimethoxybenzoyl)phenylhosphine oxide and the like. Preferred are 2,4,6-trimethylbenzoyldiphenylphosphine oxide, bis(2,4,6-tri-methylbenzoyl)phenylphosphine oxide and bis(2,6-dimethoxybenzoyl)-2,4,4-trimethylpentylphosphine oxide.

These acylphosphine oxide photopolymerization initiators may be used singly or two or more of them may be used in admixture.

The level of addition of the acylphosphine oxide photopolymerization initiator (B) is not particularly restricted but, from the viewpoint of curability and prevention of bleeding out of unreacted matter, it is preferably 0.001 to 10 parts by weight, more preferably 0.01 to 5 parts by weight, per 100 parts by weight of the component (A). From the improved high-temperature compressibility viewpoint, it is preferably 0.001 to 0.5 part by weight, more preferably 0.01 to 0.5 part by weight, per 100 parts by weight of the component (A).

### <<Component (C)>>

As the component (C), a photopolymerization initiator other than the component (B) may me used.

The component (C) is not particularly limited, but a photoradical initiator or a photoanion initiator is preferred. In particular, the photoradical initiator is preferred.

As the photoradical initiator, acetophenone, propiophenone, benzophenone, xanthol, fluoreine, benzaldehyde, anthraquinone, triphenylamine, carbozole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoyl, benzoin methyl ether, benzoin butyl ether, bis(4-dimethylaminophenyl) ketone, benzylmethoxyketal, 2-chlorothioxanthone, 2,2-dimethoxy-1,2-diphenylethan-1-one, 1-hydroxycyclohexyl phenyl ketone, 2-hydroxy-2-methyl-1-phenylpropan-1-one, 2-methyl-1-[4-(methylthio)phenyl]-2-morpholinopropan-1-one, 2-benzyl-2-dimethylamino-1-(4-morpholinophenyl)butanone-1, dibenzoyl and the like are preferred. Among these, α-hydroxyketone compounds (e.g. benzoin, benzoin methyl ether, benzoin butyl ether, 1-hydroxycyclohexyl phenyl ketone, etc.) and phenyl ketone derivatives (e.g. acetophenone, propiophenone, benzophenone, 3-methylacetophenone, 4-methylacetophenone, 3-pentylacetophenone, 2,2-diethoxyacetophenone, 4-methoxyacetophenone, 3-bromoacetophenone, 4-allylacetophenone, 3-methoxybenzophenone, 4-methylbenzophenone, 4-chlorobenzophenone, 4,4'-dimethoxybenzophenone, 4-chloro-4'-benzylbenzophenone, bis(4-dimethylaminophenyl) ketone, etc.) are preferred.

As the photoanion initiators, there may be mentioned, for example, 1,10-diaminodecane, 4,4'-trimethylenedipiperidine, carbamates and derivatives thereof, cobalt-amine complexes, aminoxyimino compounds, ammonium borates and so forth.

These initiators can be used alone, in combination of two or more of these, or in combination with another compound. As specific example of the combination thereof with another compound, for example, the initiator may be combined with an amine, such as diethanolmethylamine, dimethylethanolamine, or triethanolamine, and further combined with an iodonium salt such as diphenyl iodonium chloride, or a dye, such as methylene blue, and an amine.

When the photopolymerization initiator is used, if required, a polymerization inhibitor, such as hydroquinone, hydroquinone monomethyl ether, benzoquinone, para-tert-butyl catechol may be added.

Furthermore, a near-infrared light absorbing cationic dye may be used as a near-infrared photopolymerization initiator.

As the near-infrared light absorbing cationic dye, a dye which is excited with light energy in a range of 650 nm to 1, 500 nm, for example, the near-infrared light absorbing cationic dye-borate anion complex disclosed in Japanese Kokai Publication Hei-03-111402 and Hei-05-194619, is preferably used. A boron-based sensitizing agent is more preferably combined.

The level of addition of the photopolymerization initiator (C) is not particularly restricted but, from the viewpoint of curability and prevention of bleeding out of unreacted matter, it is preferably 0.001 to 10 parts by weight per 100 parts by weight of the component (A).

### <<Active energy ray-curable composition>>

As mentioned above, the active energy ray-curable composition of the present invention comprises the component (A) and the component (B) as essential components. In addition, it may further comprise the component (C) where necessary.

A polymerizable monomer and/or oligomer and the like can be added for improving surface curability, imparting toughness, decreasing the viscosity to improve workability, or the like. This has no limitation, however.

### <Polymerizable monomer and/or oligomer>

As the polymerizable monomer and/or oligomer, a monomer and/or oligomer having a radical polymerizable group or a monomer and/or oligomer having an anionic polymerizable group is preferred in terms of reactivity.

Examples of the radical polymerizable group include acryl functional groups, such as a (meth)acryloyl type group, a styrene group, an acrylonitrile group, a vinylester group, an N-vinylpyrrolidone group, an acrylamide group, a conjugated diene group, a vinyl ketone group, a halogenated vinyl group, a halogenated vinylidene group, and the like. In particular, a monomer and/or oligomer having a (meth)acryloyl type group similar to the vinyl polymer used in the present invention is preferred.

Examples of the anionic polymerizable group include acrylic functional groups such as a (meth) acryloyl type group, a styrene group, an acrylonitrile group, an N-vinylpyrrolidone group, an acrylamide group, a conjugated diene group, a vinyl ketone group, and the like. In particular, a monomer and/or oligomer having a (meth) acryloyl type group similar to the vinyl polymer used in the present invention is preferred.

As specific examples of the above-mentioned monomers, there may be mentioned (meth)acrylate monomers, cyclic acrylates, styrenic monomers, acrylonitrile, vinyl ester monomers, N-vinylpyrrolidone, acrylamide monomers, conjugated diene monomers, vinyl ketone monomers, vinyl halide and vinylidene halide monomers and polyfunctional monomers, among others.

As the (meth)acrylate monomers, there may be mentioned methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, dodecyl (meth)acrylate, phenyl (meth) acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxy)propyltrimethoxysilane, (meth)acrylic acid-ethylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth) acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate and so forth. The compounds represented by the following formulae may also be mentioned. In the following formulae, n represents an integer of 0 to 20.

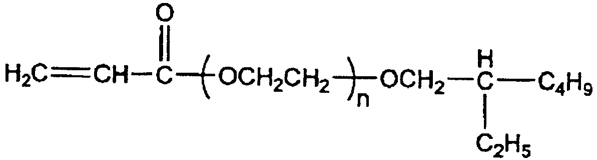

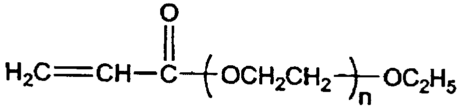

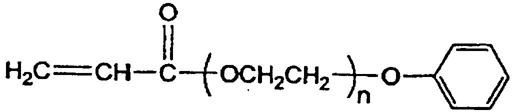

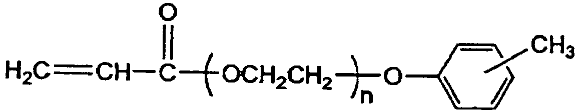

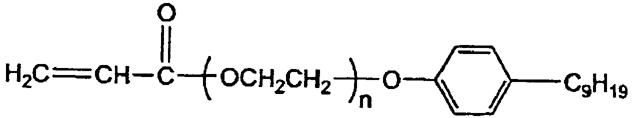

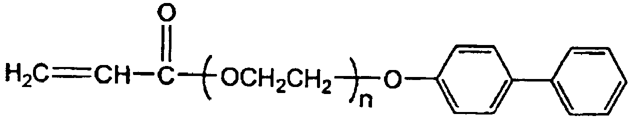

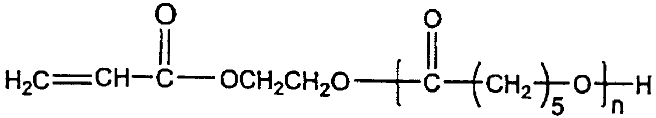

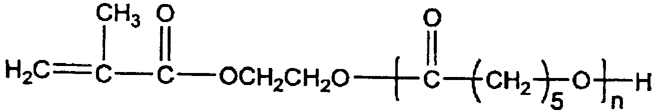

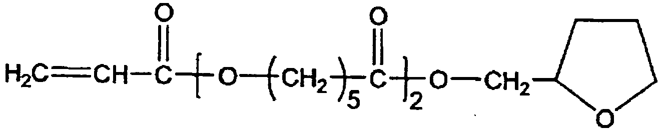

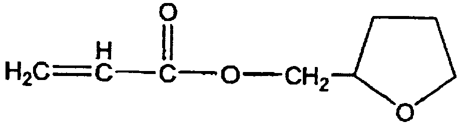

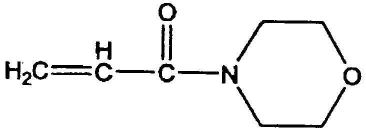

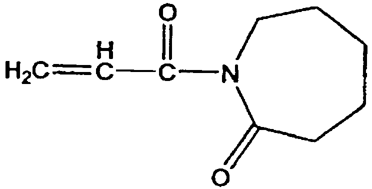

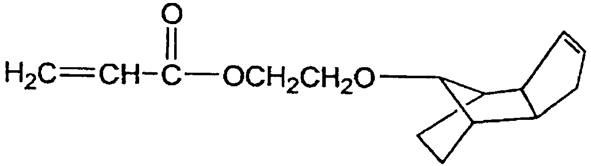

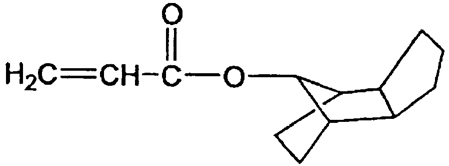

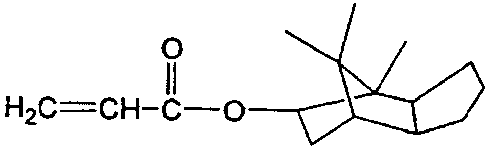

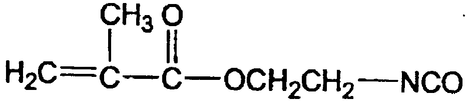

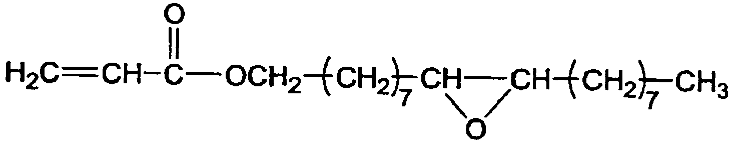

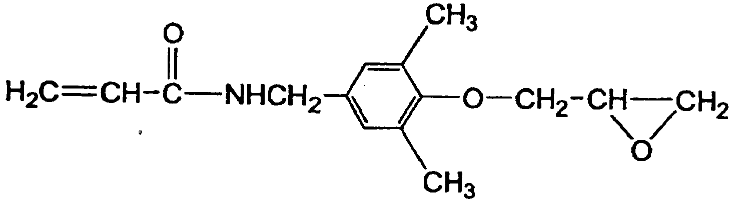

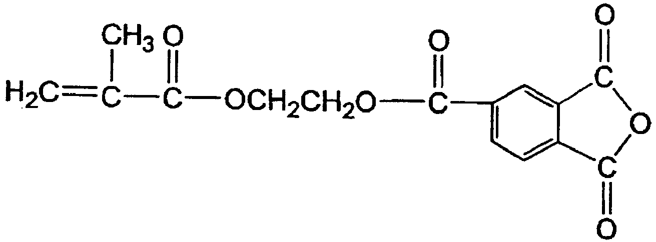

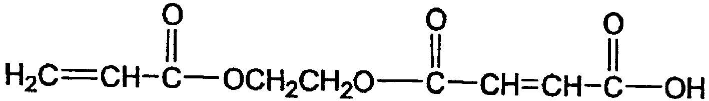

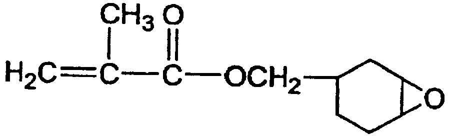

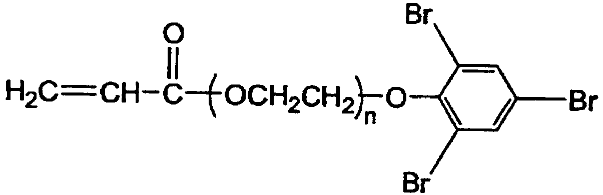

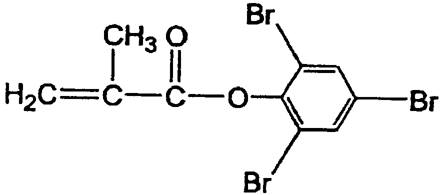

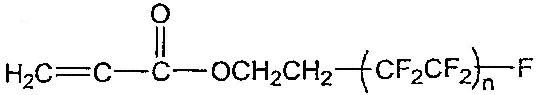

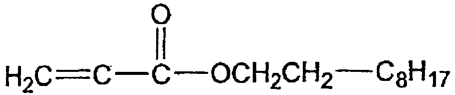

Examples of the styrene monomers include styrene and α-methylstyrene, among others.

Examples of the vinyl ester monomers include vinyl acetate, vinyl propionate, and vinyl butyrate, among others.

Examples of the acrylamide monomers include acrylamide and N,N-dimethylacrylamide, among others.

Examples of the conjugated diene monomers include butadiene and isoprene, among others.

Example of the vinyl ketone monomers include methyl vinyl ketone, among others.

Example of the vinyl halide or vinylidene halide monomers include vinyl chloride, vinyl bromide, vinyl iodide, vinylidene chloride and vinylidene bromide, among others.

Examples of polyfunctional monomers include trimethylolpropane triacrylate, neopentylglycol polypropoxydiacrylate, trimethylolpropane polyethoxytriacrylate, bisphenol F polyethoxydiacrylate, bisphenol A polyethoxydiacrylate, dipentaerythritol polyhexanolide hexacrylate, tris(hydroxyethyl)isocyanurate polyhexanolide triacrylate, tricyclodecanedimethylol diacrylate 2-(2-acryloyloxy-1,1-dimethyl)-5-ethyl-5-acryloyloxymethyl-1,3-dioxane, tetrabromobisphenol A diethoxydiacrylate, 4,4-dimercaptodiphenyl sulfide dimethacrylate, polytetraethylene glycol diacrylate, 1,9-nonanediol diacrylate, and ditrimethylolpropane tetraacrylate.

Examples of the oligomer include epoxy acrylate resins, such as bisphenol A epoxy acrylate resins, phenol novolac epoxy acrylate resins, cresol novolac epoxy acrylate resins, and COOH-modified epoxy acrylate resins; urethane acrylate resins prepared by reacting urethane resins with a hydroxyl group-containing (meth)acrylate [hydroxyethyl (meth)acrylate, hydroxypropyl (meth)acrylate, hydroxylbutyl (meth)acrylate, pentaerythritol triacrylate, or the like], the urethane resins being prepared from polyols (polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene, hydroxyl group-terminated polyisobutylene, and the like) and organic isocyanates (tolylene diisocyanate, isophorone diisocyanate, diphenylmethane diisocyanate, hexamethylene diisocyanate, xylylene diisocyanate, and the like); resins prepared by introducing (meth)acryl groups in the polyols through ester bonds; polyester acrylate resins.

In particular, the monomer and/or oligomer having a (meth)acryloyl type group is preferred. The number-average molecular weight of the monomer and/or oligomer having a (meth) acryloyl type group is preferably 5, 000 or less. In order to improve surface curability and decrease viscosity for improving workability, the molecular weight of the monomer used is more preferably 1, 000 or less because of high compatibility.

The level of addition of the polymerizable monomer and/or oligomer is preferably 0.1 to 100 parts by weight per 100 parts by weight of the component (A) from the viewpoints of surface curability, toughness, viscosity decrease, and mechanical property of the cured product.

### <Various additives>

Various additives and the like can be added to the active energy ray-curable composition of the present invention for modifying physical properties thereof.

### <Solvent>

Organic solvent can be added to the active energy ray-curable composition of the present invention from the viewpoints of excellent workability in coating, excellent drying property before and after curing, and the like.

In general, an organic solvent having a boiling point of 50 to 180°C is preferred in view of excellent workability in coating and excellent drying property before and after curing. Specific examples of the solvent include alcohol solvents, such as methanol, ethanol, isopropanol, n-butanol, and isobutanol; ester solvents, such as methyl acetate, ethyl acetate, butyl acetate, ethylene glycol monoethyl ether, ethylene glycol monoethyl ether acetate, and ethylene glycol monobutyl ether; ketone solvents, such as acetone, methyl ethyl ketone, and methyl isobutyl ketone; aromatic solvents, such as toluene and xylene; and cyclic ether solvents, such as dioxane. These solvents can be used alone or as a mixture of at least two.

The level of addition of the solvent is preferably 1 to 900 parts by weight per 100 parts by weight of the component (A) from the viewpoints of the balance between the end result of the cured product, workability and dryness.

### <Reinforcing silica>

From the viewpoint of improvement in strength of a cured product, reinforcing silica can be added to the active energy ray-curable composition of the present invention.

As the reinforcing silica, fumed silica, precipitated silica, or the like can be used. In particular, silica having a particle size of 50 µm or less and a specific surface area of 80 cm²/g or more is preferred from the viewpoint of a reinforcing effect. The method for determining the specific surface area will be mentioned below.

Surface-treated silica, for example, silica surface-treated with organosilane, organosilazane, diorganocyclopolysiloxane, or the like, is more preferred because flowability suitable for molding is easily exhibited.

Specific examples of the reinforced silica include, but not limited to, fumed silica, e.g., Aerosil manufactured by Nippon Aerosil Co., Ltd., and precipitated silica, e.g., Nipsil manufactured by Nihon Silica Kogyo.

The reinforcing silica may be used alone or two or more types of silica may be combined.

The amount of the reinforcing silica added is not particularly limited, but the amount is 0.1 to 100 parts by weight, preferably 0.5 to 80 parts by weight, and particularly preferably 1 to 50 parts by weight relative to 100 parts by weight of the sum of the component (A) and the component (B). When the adding amount is less than 0.1 part by weight, the effect of improving reinforcement may be insufficient. When the adding amount exceeds 100 parts by weight, the workability of the composition may degrade.

### <Filler>

The active energy ray-curable composition of the present invention may further contain any one of various fillers other than the reinforcing silica according to demand.

Examples of the filler include, but not limited to, reinforcing fillers, such as wood flour, pulp, cotton chips, asbestos, glass fibers, carbon fibers, mica, walnut shell flour, chaff flour, graphite, diatomite, white clay, dolomite, silicic anhydride, hydrous silicic acid, and carbon black; fillers, such as heavy calcium carbonate, colloidal calcium carbonate, magnesium carbonate, diatomite, calcined clay, clay, talc, titanium oxide, bentonite, organic bentonite, ferric oxide, colcothar, aluminum fine powder, flint powder, zinc oxide, active zinc white, zinc powder, zinc carbonate, and Shirasu balloon; and fibrous fillers, such as asbestos, glass fibers and glass filaments, carbon fibers, Kevlar fibers, and polyethylene fibers. Among these fillers, carbon black, calcium carbonate, titanium oxide, and talc are preferred. When a cured product with low strength and high elongation is desired, a filler mainly selected from titanium oxide, calcium carbonate, talc, ferric oxide, zinc oxide, and Shirasu balloon can be added.

In general, calcium carbonate having a small specific surface area may have the insufficient effect of improving the breaking strength, breaking elongation, adhesiveness, and weatherproof adhesiveness of the cured product. Use of calcium carbonate having a larger specific surface area increases the effect of improving the breaking strength, breaking elongation, adhesiveness, and weatherproof adhesiveness of the cured product. Furthermore, calcium carbonate is more preferably surface-treated with a surface treatment agent. Use of surface-treated calcium carbonate possibly improves the workability of the composition of the present invention and further improves the effect of improving the adhesiveness and weatherproof adhesiveness of the curable composition, as compared with use of calcium carbonate not surface-treated.

As the surface treatment agent, an organic compound or surfactant, such as a fatty acid, fatty acid soap, or a fatty acid ester, or a coupling agent, such as a silane coupling agent or a titanate coupling agent, can be used. Specific examples of the surface treatment agent include, but not limited to, fatty acids, such as caproic acid, caprylic acid, pelargonic acid, capric acid, undecanoic acid, lauric acid, myristic acid, palmitic acid, stearic acid, behenic acid, and oleic acid; sodium and potassium salts of these fatty acids; alkyl esters of these fatty acids; and the like. Specific examples of the surfactant include sulfate-type anionic surfactants, such as sodium, potassium and other salts of polyoxyethylene alkyl ether sulfates, long-chain alcohol sulfates and the like; sulfonic acid-type anionic surfactants, such as sodium, potassium and other salts of alkylbenzenesulfonic acid, alkylnaphthalenesulfonic acid, paraffin sulfonic acid, α-olefin sulfonic acid, alkylsulfosuccinic acid and the like.

The amount of the surface treatment agent used is preferably in a range of 0.1 to 20% by weight and more preferably in a range of 1 to 5% by weight relative to calcium carbonate. When the amount of the surface treatment agent is less than 0.1% by weight, the effect of improving workability, adhesiveness, and weatherproof adhesiveness may become unsatisfactory. When the amount exceeds 20% by weight, the storage stability of the composition may degrade.

In use of calcium carbonate, colloidal calcium carbonate is preferably used for particularly expecting the effect of improving the thixotropy of the resultant mixture and the breaking strength, breaking elongation, adhesiveness, and weatherproof adhesiveness of the cured product. However, the purpose of use is not limited to this.

On the other hand, heavy calcium carbonate may be added for decreasing the viscosity of the resultant mixture, increasing the amount thereof, and decreasing the cost. In use of the heavy calcium carbonate, the heavy calcium carbonate described below can be used according to demand.

The heavy calcium carbonate is prepared by mechanically grinding and processing natural chalk (whiting), marble, limestone, or the like. The grinding process can be a dry process or wet process. In many cases, a product of wet grinding degrades the storage stability of the composition of the present invention and is thus undesirable. The ground heavy calcium carbonate is sorted to form products having various average particle sizes. When the effect of improving the breaking strength, breaking elongation, adhesiveness, and weatherproof adhesiveness of the cured product is expected, the specific surface area is, but not limited to, preferably 1.5 m²/g to 50 m²/g, further preferably 2 m²/g to 50 m²/g, more preferably 2.4 m²/g to 50 m²/g, and particularly preferably 3 m²/g to 50 m²/g. With a specific surface area of less than 1.5 m²/g, the improving effect may be insufficient. Of course, this does not apply to a case in which the heavy calcium carbonate is added only for decreasing the viscosity or increasing the amount.

The specific surface area is measured by an air permeability method (a method for determining a specific surface area from air permeability to a powder-packed layer) according to JIS K 5101. As a measuring device, a SS-100 model specific surface area meter manufactured by Shimadzu Corporation is preferably used.

The above-listed filters may be used alone or in combination of two or more if necessary. For example, when heavy calcium carbonate with a specific surface area of 1.5 m²/g or more and colloidal calcium carbonate are combined according to demand, an increase in viscosity of the resultant mixture can be moderately suppressed, and the significant effect of improving the breaking strength, breaking elongation, adhesiveness, and weatherproof adhesiveness of the cured product can be expected. However, the combination is not particularly limited to this.

When the filler is used, the filler is preferably added in an amount in a range of 5 to 1,000 parts by weight, more preferably in a range of 20 to 500 parts by weight, and particularly preferably in a range of 40 to 300 parts by weight relative to 100 parts by weight of the component (A). When the mixing amount is less than 5 parts by weight, the effect of improving the breaking strength, breaking elongation, adhesiveness, and weatherproof adhesiveness of the cured product may become insufficient. When the mixing amount exceeds 1,000 parts by weight, the workability of the composition may degrade. The fillers may be used alone or in combination of two or more.

### <Adhesiveness imparting resin>

The active energy ray-curable composition of the present invention preferably includes a (meth) acrylic polymer as a main component, and thus an adhesiveness imparting resin need not necessarily be added. However, any one of various resins can be added. Specific examples of the resins include phenol resins, modified phenol resins cyclopentadiene-phenol resins, xylene resins, coumarone resins, petroleum resins, terpene resins, terpene phenol resins, and rosin ester resins.

The level of addition of the adhesiveness imparting resin is preferably 0.1 to 100 parts by weight per 100 parts by weight of the component (A) from the viewpoint of the balance between mechanical property of the cured product, heat resistance, oil resistance and adhesiveness.

### <Antiaging agent>

The active energy ray-curable composition of the present invention can contain an antiaging agent.

The antiaging agent is not necessarily required because the acrylic polymer originally has excellent heat resistance, weather resistance, and durability. However, a conventional known antioxidant or photo-stabilizer can be appropriately used. The antiaging agent can be also used for controlling the polymerization, thereby controlling the physical properties.

Known examples of the antioxidant include, but not limited to, various antioxidants, such as the antioxidants described in "Antioxidant Handbook" issued by Taisei Corporation, and the antioxidants described in "Deterioration and Stabilization of Polymer Material" issued by CMC Chemical (235-242).

Specific examples of the antioxidants include thioether-based antioxidants, such as MARK PEP-36 and MARK AO-23 (both manufactured by Adeka Argus Chemical Co., Ltd.); and phosphorus-based antioxidants, such as Irgafos 38, Irgafos 168, and Irgafos P-EPQ (all manufactured by Ciba-Geigy of Japan); hindered phenol compounds. In particular, the hindered phenol compounds below are preferred.

Specific examples of the hindered phenol compounds include 2,6-di-tert-butyl-4-methylphenol, 2,6-di-tert-butyl-4-ethylphenol, mono(di or tri) (α-methylbenzyl)phenol, 2,2'-methylenebis(4-ethyl-6-tert-butylphenol), 2,2'-methylenebis(4-methyl-6-tert-butylphenol), 4,4'-butylidenebis(3-methyl-6-tert-butylphenol), 4,4'-thiobis(3-methyl-6-tert-butylphenol), 2,5-di-tert-butylhydroquinone, 2,5-di-tert-amylhydroquinone, triethylene glycol-bis -[3-(3-tert-butyl-5-methyl-4-hydroxyphenyl)propionate], 1,6-hexanediol-bis [3-(3,5-di-tert-butyl-4-hydroxyphenyl)propionate], 2,4-bis-(n-octylthio)-6 -(4-hydroxy-3,5-di-tert-butylanilino)-1,3,5-triazine, pentaerythrityl-tetrakis [3-(3,5-di-tert-butyl-4-hydroxyphenyl)propionate], 2,2-thio-diethylenebis [3-(3,5-di-tert-butyl-4-hydroxyphenyl)propionate], octadecyl-3-(3,5-di-tert-butyl-4-hydroxyphenyl)propionate, N,N'-hexamethylenebis (3,5-di-tert-butyl-4-hydroxy-hydrocinnamide), 3,5-di-tert-butyl-4-hydroxy-benzylphosphonate diethyl ester, 1,3,5-trimethyl-2,4,6-tris (3,5-di-tert-butyl-4-hydroxybenzyl)benzene, bis(3,5-di-tert-butyl-4-hydroxybenzylphosphonate ethyl) calcium, tris-(3,5-di-tert-butyl-4-hydroxybenzyl) isocyanurate, 2,4-2,4-bis[(octylthio)methyl] o-cresol, N,N'-bis[3-(3,5-di-tert-butyl-4-hydroxyphenyl)propionyl] hydrazine, tris(2,4-di-tert-butylphenyl)phosphite, 2-(5-methyl-2-hydroxyphenyl)benzotriazole, 2-[2-hydroxy-3,5-bis(α,α-dimethylbenzyl)phenyl] -2H-benzotriazole, 2-(3,5-di-tert-butyl-2-hydroxyphenyl)benzotriazole, 2-(3-tert-butyl-5-methyl-2-hydroxyphenyl) -5-chlorobenzotriazole, 2-(3,5-di-tert-butyl-2-hydroxyphenyl)-5-chlorobenzotriazole, 2-(3,5-di-tert-amyl-2-hydroxyphenyl)benzotriazole, 2-(2'-hydroxy-5'-tert-octylphenyl)-benzotriazole, methyl-3-[3-tert-butyl-5-(2H-benzotriazol-2-yl)-4 -hydroxyphenyl]propionate-polyethylene glycol (molecular weight about 300) condensates, hydroxyphenylbenzotriazole derivatives, 2-(3,5-di-tert-butyl-4-hydroxybenzyl)-2-n-butylmalonate bis(1,2,2,6,6-pentamethyl-4-piperidyl), and 2,4-di-tert-butylphenyl-3,5-di-tert-butyl-4-hydroxybenzoate.

Examples of commercial products include, but not limited to, NOCRAC 200, NOCRAC M-17, NOCRAC SP, NOCRAC SP-N, NOCRAC NS-5, NOCRAC NS-6, NOCRAC NS-30, NOCRAC 300, NOCRAC NS-7, and NOCRAC DAH (all manufactured by Ouchi Shinko Chemical Industries Co.) ; MARK AO-30, MARK AO-40, MARK AO-50, MARK AO-60, MARK AO-616, MARK AO-635, MARK AO-658, MARK AO-80, MARK AO-15, MARK AO-18, MARK 328, and MARK AO-37 (all manufactured by Adeka Argus Chemical Co., Ltd.); IRGANOX-245, IRGANOX-259, IRGANOX-565, IRGANOX-1010, IRGANOX-1024, IRGANOX-1035, IRGANOX-1076, IRGANOX-1081, IRGANOX-1098, IRGANOX-1222, IRGANOX-1330, and IRGANOX-1425WL (all manufactured by Ciba-Geigy of Japan); and Sumilizer GA-80 (manufactured by Sumitomo Chemical Co., Ltd.).

Other examples include monoacrylate phenol antioxidants each having an acrylate group and a phenol group; and nitroxide compounds.

Specific examples of the monoacrylate phenol antioxidants include 2-tert-butyl-6-(3-tert-butyl-2-hydroxy-5-methylbenzyl)-4 -methylphenyl acrylate (product name, Sumilizer GM), and 2,4-di-tert-amyl-6-[1-(3,5-di-tert-amyl-2-hydroxyphenyl) ethyl]phenyl acrylate (product name, Sumilizer GS).

Specific examples of the nitroxide compounds include, but not limited to, nitroxy free radicals derived from cyclic hydroxyamines, such as 2,2,6,6-substituted-1-piperidinyloxy radical and 2,2,5,5-substituted-1-pyrrolidinyloxy radical. As a substituent, an alkyl group having 4 or less carbon atoms, such as methyl or ethyl, is suitable.

Specific examples of the nitroxy free radicals include, but not limited to, 2,2,6,6-tetramethyl-1-piperidinyloxy radical (TEMPO), 2, 2, 6, 6-tetraethyl-1-piperidinyloxy radical, 2,2,6,6-tetramethyl-4-oxo-1-piperidinyloxy radical, 2, 2, 5,5-tetramethyl-1-pyrrolidinyloxy radical, 1,1,3,3-tetramethyl-2-isoindolinyloxy radical, and N,N-di-tert-butylaminoxy radical.

Instead of the nitroxy free radical, a stable free radical such as galvinoxyl free radical may be used.

The antioxidant may be combined with a photo-stabilizer, and the combination is preferred because the effect is further exhibited, and heat resistance may be particularly improved. A mixture of an antioxidant and a photo-stabilizer, such as Tinuvin C353 or Tinuvin B75 (both manufactured by Ciba-Geigy of Japan), may be used.

In cases where cured products are produced by photo-induced radical curing of intramolecular (meth)acryloyloxy type group-containing vinyl polymers or (meth)acrylic polymers, the control of curing is difficult because the polymerization proceeds rapidly and, when the progress of polymerization is excessive, an overcrosslinked condition results and the cured products obtained are often unsatisfactory in mechanical strength, failing to show sufficient elongation, for instance. For controlling the polymerization, it is possible to employ the methacryloyl group as the functional group involved in the polymerization to thereby reduce the polymerizability as compared with the case of the acryloyloxy group. This is not practical, however, since, in this case, the polymerizability often lowers to excess. The use of a polymerization inhibitor is also conventional; this is intended for inhibiting the polymerization itself, however, hence is not suited to control the polymerization. On the other hand, antioxidants are sometimes added to improve the thermal stability and weather resistance of the cured products obtained but the purpose of the use thereof is not to improve the initial physical properties of the cured products.

The monoacrylate phenolic antioxidants mentioned above, when added to the compositions of the invention, can not only serve as antioxidants but also control the copolymerization. The same ones as those enumerated above may be mentioned as examples since the physical properties of the cured products can be easily controlled with them. The monoacrylate phenolic antioxidants may be used singly or two or more of them may be used in combination.

The level of addition of each of the above-mentioned various antioxidants, inclusive of the monoacrylate phenolic antioxidants, is not particularly restricted but, for the purpose of producing favorable effects on the mechanical properties of the cured products, it is preferably not lower than 0.01 part by weight, more preferably not lower than 0.05 part by weight, per 100 parts by weight of the component (A). The addition level is preferably not higher than 5.0 parts by weight, more preferably not higher than 3.0 parts by weight, still more preferably not higher than 2.0 parts by weight.

### <Plasticizer>

The active energy ray-curable composition of the present invention can contain a plasticizer.

Examples of the plasticizer include phthalic acid esters, such as dibutyl phthalate, diheptyl phthalate, di(2-ethylhexyl) phthalate, and butylbenzyl phthalate; non-aromatic dibasic acid esters, such as dioctyl adipate and dioctyl sebacate; polyalkylene glycol esters, such as diethylene glycol dibenzoate and triethylene glycol dibenzoate; phosphoric acid esters, such as tricresyl phosphate and tributyl phosphate; chlorinated paraffins; hydrocarbon oils, such as alkyldiphenyl and partially hydrogenated terphenyl. These plasticizers can be used alone or in combination according to the purpose of controlling physical properties or quality. However, the plasticizer is not necessarily required. The plasticizer can be added in production of the polymer.

The level of addition of the plasticizer is preferably 5 to 800 parts by weight per 100 parts by weight of the component (A) from the viewpoints of elongation impartion, workability, prevention of bleeding out.

### <Adhesiveness improve>

Also, the active energy ray-curable composition of the present invention may contain any one of various adhesiveness improvers for improving adhesiveness to various supports (plastic films and the like).

Examples of the adhesiveness improvers include alkylalkoxysilanes, such as methyltrimethoxysilane, dimethyldimethoxysilane, trimethylmethoxysilane, and n-propyltrimethoxysilane; alkylisopropenoxysilanes, such as dimethyldiisopropenoxysilane, methyltriisopropenoxysilane, and γ-glycidoxypropylmethyldiisopropenoxysilane; functional group-containing alkoxysilanes, such as γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)-γ-aminopropyltrimethoxysilane, N-(β-aminoethyl)-γ-aminopropylmethyldimethoxysilane, γ-mercaptopropyltrimethoxysilane, γ-mercaptopropylmethyldimethoxysilane; silicone vanishes; and polysiloxanes.

The level of addition of the adhesiveness improver is preferably 0.1 to 20 parts by weight per 100 parts by weight of the component (A) from the viewpoints of the balance between mechanical property (elongation and strength) of the cured product and adhesiveness.

### <<Cured product>>

### <Curing process>

The active energy ray-curable composition of the present invention can be cured by, for example, active energy rays such as UV or electron beams in order to obtain a cured product.

### <Curing with active energy ray>

A source of the active energy rays is not particularly limited, but light or electron beams are applied using a high-pressure mercury lamp, a low-pressure mercury lamp, an electron beam irradiation device, a halogen lamp, a light-emitting diode, a semiconductor laser, or metal halide etc. depending on the property of the photopolymerization initiator, for example.

The dose of active energy rays is not particularly restricted but may be at any level at which the active energy ray-curable composition can be cured. Preferably, it is not lower than 6000 mj/cm², more preferably not lower than 12000 mj/cm².

### <Preferred active energy ray-curable compositions and cured products derived therefrom>

While the active energy ray-curable composition of the invention is characterized in that it comprises the component (A) and component (B) mentioned above as essential components, such modes of embodiment as given below are preferred, as mentioned hereinabove.

The component (A) polymer is preferably an acrylic ester polymer and the main chain thereof is preferably one produced by living radical polymerization, in particular atom transfer radical polymerization.

The component (B) acylphosphine oxide photopolymerization initiator preferably comprises at least one species selected from among 2,4,6-trimethylbenzoyldiphenyl-phosphine oxide, bis(2,4,6-trimethylbenzoyl)phenylphosphine oxide and bis(2,6-dimethoxybenzoyl)-2,4,4-trimethylpentylphosphine oxide.

The composition preferably contains a photopolymerization initiator other than the component (B) as added as component (C) in addition to the component (A) and the component (B).

Further, from the viewpoint of improvement in strength of a cured product, elongation impartion, workability, among others, the addition of an acrylate monomer is effective.

For curing the active energy ray-curable composition of the invention, UV rays or electron beams are preferably used.

### <<Uses>>

Although not being particularly limited, the curable composition of the invention is usable for various uses for electric and electronic parts such as sealants for rear faces of solar cells; insulating materials such as insulating coating materials for electric wires and cables; coating materials, foams, electric and electronic potting agents, films, gaskets, casting materials, artificial marble, various kinds of molding materials, rustproof and waterproof sealants for end faces (cut sections) of net glass or laminated glass; and the like.

The molded product showing rubber elasticity and obtained from the curable composition of the invention can be used widely and mainly for gaskets and packing.

For example, in an automobile field, for vehicle body parts, it can be used for seal materials for keeping air-tightness, vibration-absorption materials for glass, vibration-absorption materials for vehicle body parts, and especially for window seal gaskets and gaskets for door glass. For chassis parts, it can be used as engine and suspension rubber for vibration absorption/noise reduction, particularly for engine mounting rubber. For engine parts, it can be used for hoses for cooling, fuel supply, exhaust control or the like, sealing materials for engine oil, and the like. Further, it can be used for parts of exhaust gas-cleaning apparatus and brake parts.

In a household electrical appliance field, it can be used for packing, O-rings, belts and the like. More particularly, it can be used ornaments, water-proof packing, vibration-absorption rubber and anti-insect packing for lighting and illuminating appliances, vibration absorption/noise reduction/air seal materials for cleaners, dripping covers, water-proof packing, heater packing, electrode part packing and safety valve diaphragms for electric water heating apparatus, hoses, water-proof packing and electromagnetic valves for sake-heating apparatus, water-proof packing, water supply tank-packing, water-absorbing valves, water-receiving packing, connection hose, belts, heat-insulating heater-packing, steam outlet-sealants and the like for steam oven microwave and jar-type rice cookers, oil packing, 0-rings, drain packing, pressure tubes, air blow-tubes, air suction-/blow-packing, vibration-absorption rubber, oil supply port-packing, oil meter-packing, oil sending-pipes, diaphragm valves, gas tubes and the like for combustion apparatuses, speaker gaskets, speaker edge, turn table sheets, belts, pulleys and the like for acoustic appliances, and the like.

In a building and construction field, it can be used for gaskets for structures (zipper gaskets), pneumatic-structure roofings, water-proof materials, shaped sealants, vibration-absorption materials, noise-reduction materials, setting blocks, slide member and the like.

In a sporting field, it can be used for all-weather paving materials, gymnasium floor materials and the like sport floor applications, shoe bottom materials, bottom inserts and the like sport shoes applications, golf balls and the like balls for ball games applications, and the like.

In a field of vibration-absorption rubber, it can be used for vibration-absorption rubber for automobiles, vibration-absorption rubber for railway cars, vibration-absorption rubber for aircrafts, fenders and the like.

In a marine and civil engineering field, it can be used for construction materials such as rubber expansive joints, journals, water-stopping plates, water-proof sheets, rubber dams, elastic paving materials, vibration-absorption pads, and protectors; for sub-materials for working such as rubber frames, rubber packers, rubber skirts, sponge mats, mortar hoses, and mortar strainers; for auxiliary materials for working such as rubber sheets and air hoses; for safety products such as rubber buoyant and wave-absorbing materials; for environment preservation products such as oil fences, silt fences, anti-pollution materials, marine hoses, dredging hoses, and oil skimmers; and the like.

Further, it may be used as rubber plates, mats, foam plates and the like.

### (EFFECT OF THE INVENTION)

By using the active energy ray-curable composition of the invention which is excellent in curability with active energy rays, in particular in depth curability, it is possible to provide cured products excellent in thermal stability, weather resistance, oil resistance and permanent compression set features. By using an acylphosphine oxide photopolymerization initiator at specific levels, it is possible to render cured products excellent in high-temperature permanent compression set as well.

### BEST MODE FOR CARRYING OUT THE INVENTION

Although examples and comparative examples of the present invention will be described below, the present invention is not limited to these examples.

In the examples below, the number-average molecular weight and the weight-average molecular weight (ratio of the weight-average molecular weight to the number-average molecular weight) were calculated by a standard polystyrene calibration method using gel permeation chromatography (GPC). In GPC measurement, a polystyrene-crosslinked gel column (Shodex GPC K-804; manufactured by Showa Denko K. K.) and chloroform were used as a GPC column and a mobile solvent, respectively.

In the examples below, the average number of terminal (meth)acryloyloxy groups means the numbers of (meth) acryloyloxy groups introduced per molecule of a polymer. The average number was determined by ¹H NMR analysis and the GPC number-average molecular weight.

In the examples and comparative examples below, "parts" represents "parts by weight".

### (Production Example 1) (Synthesis of poly(n-butyl acrylate/ethyl acrylate/2-methoxyethyl acrylate) having acryloyloxy groups at both termini)

First, n-butyl acrylate, ethyl acrylate, and 2-methoxyethyl acrylate were polymerized at a molar ratio of 25/46/29 using cuprous bromide as a catalyst, pentamethyldiethylenetriamine as a ligand, and diethyl 2,5-dibromoadipate as an initiator to produce bromine-terminated poly(n-butyl acrylate/ethyl acrylate/2-methoxyethyl acrylate) having a number-average molecular weight of 21, 000 and a molecular weight distribution of 1.16.

Then, 400 g of the resultant polymer was dissolved in N,N-dimethylacetamide (400 mL), and 10.7 g of potassium acrylate was added to the resultant solution. The resulting mixture was heated and stirred at 70°C for 6 hours in a nitrogen atmosphere to produce a mixture of acryloyloxy group-terminated poly(n-butyl acrylate/ethyl acrylate/2-methoxyethyl acrylate) (referred to as "polymer [1]" hereinafter). Then, N,N-dimethylacetamide was distilled off from the mixture under reduced pressure, and toluene was added to the residue. The insoluble substance was filtered off, and toluene of the filtrate was distilled off under reduced pressure to purify polymer [1].

After the purification, polymer [1] having acryloyloxy groups at both termini had a number-average molecular weight of 21,400, a molecular weight distribution of 1.17, and an average number of terminal acryloyloxy groups of 1.8 (i.e. the introduction rate of acryloyloxy groups to a terminus was 90%).

### (Example 1)

First, 0.5 part of bis (2,4,6-trimethylbenzoyl)phenylphosphine oxide (product name: IRGACURE 819; manufactured by Ciba Specialty Chemicals) and 1 part of 2-hydroxy-2-methyl-1-phenylpropan-1-one (product name: DAROCURE 1173; manufactured by Ciba Specialty Chemicals) were added to 100 parts of polymer [1] prepared in Production Example 1, and the resultant mixture was sufficiently mixed to prepare a curable composition.

### (Example 2)

First, 0.5 part of bis(2,4,6-trimethylbenzoyl)phenylphosphine oxide (product name: IRGACURE 819; manufactured by Ciba Specialty Chemicals) and 1 part of 1-hydroxycyclohexyl phenyl ketone (product name: IRGACURE 184; manufactured by Ciba Specialty Chemicals) were added to 100 parts of polymer [1] prepared in Production Example 1, and the resultant mixture was sufficiently mixed to prepare a curable composition.

### (Comparative Example 1)

First, 1 part of 2,2-diethoxyacetophenone was added to 100 parts of polymer [1] prepared in Production Example 1, and the resultant mixture was sufficiently mixed to prepare a curable composition.

### (Comparative Example 2)

First, 1 part of 2-hydroxy-2-methyl-1-phenylpropan-1-one (product name: DAROCURE 1173; manufactured by Ciba Specialty Chemicals) was added to 100 parts of polymer [1] prepared in Production Example 1, and the resultant mixture was sufficiently mixed to prepare a curable composition.

The curable compositions obtained as described above in Examples 1 and 2 and Comparative Examples 1 and 2 were measured for UV curability and depth curability by the methods described below. The results obtained are shown in Table 1.

### <UV curability testing>

Each of the active energy ray-curable compositions prepared in the above examples and comparative examples was molded into a 2-mm-thick sheet, and the sheet was cured by passing under a metal halide lamp (80 W/cm, distance from radiation source 15 cm, belt speed 2.0 m/minute) for irradiation repeatedly as many times as necessary for curing.

The number of times of irradiation required until it could be confirmed, by touching with a finger, that the 2-mm-thick sheet was in a sufficiently cured condition was employed as an index of UV curability.

### <Depth curability testing>

Each of the active energy ray-curable compositions prepared in the above examples and comparative examples was cast into a cylindrical mold, and the cylinder, 28 mm in diameter and 12 mm in thickness, was irradiated with a metal halide lamp (80 W/cm, distance from radiation source 15 cm) for 30 seconds. The thickness of the portion cured on that occasion was employed as an index of depth curability.

**Table 1**

| | Photopolymerization initiators | Amount (part by weight) | UV curability (times) | Depth curability (mm) |
|---|---|---|---|---|
| Example 1 | Irgacure819/ Darocure1173 | 0.5/1 | 5 | 3.8 |
| Example2 | Irgacure819/ Irgacure 184 | 0.5/1 | 3 | 4.0 |
| Compar.Ex.1 | 2,2-Diethoxyacetophenone | 1 | 14* | 2.4 |
| Compar.Ex.2 | Darocure1173 | 1 | 14* | 3.1 |

| | | | | |
|---|---|---|---|---|
| *: Partial incomplete cure on the bottom of the sheet. | | | | |

The results shown in Table 1 indicate that the curable compositions of Examples 1 and 2, which contain an acylphosphine oxide photopolymerization initiator, can be cured at lower active energy ray dose levels and are superior in depth curability as compared with the curable compositions of Comparative Examples 1 and 2 which contain no acylphosphine oxide initiator.

### (Production Example 2) (Synthesis of poly(n-butyl acrylate/ethyl acrylate/2-methoxyethyl acrylate) having acryloyloxy groups at both termini)

First, n-butyl acrylate, ethyl acrylate, and 2-methoxyethyl acrylate were polymerized at a molar ratio of 25/46/29 using cuprous bromide as a catalyst, pentamethyldiethylenetriamine as a ligand, and diethyl 2,5-dibromoadipate as an initiator to produce bromine-terminated poly(n-butyl acrylate/ethyl acrylate/2-methoxyethyl acrylate) having a number-average molecular weight of 16, 500 and a molecular weight distribution of 1.13.

Then, 400 g of the resultant polymer was dissolved in N,N-dimethylacetamide (400 mL), and 14.3 g of potassium acrylate was added to the resultant solution. The resulting mixture was heated and stirred at 70°C for 6 hours in a nitrogen atmosphere to produce a mixture of acryloyloxy group-terminated poly(n-butyl acrylate/ethyl acrylate/2-methoxyethyl acrylate) (referred to as "polymer [2]" hereinafter). Then, N, N-dimethylacetamide was distilled off from the mixture under reduced pressure, and toluene was added to the residue. The insoluble substance was filtered off, and toluene of the filtrate was distilled off under reduced pressure to purify polymer [2].

After the purification, polymer [2] having acryloyloxy groups at both termini had a number-average molecular weight of 16,900, a molecular weight distribution of 1.14, and an average number of terminal acryloyloxy groups of 1.8 (i.e. the introduction rate of acryloyloxy groups to a terminus was 90%).

### (Example 3)

First, 0.5 part of bis(2,4,6-trimethylbenzoyl)phenylphosphine oxide (product name: IRGACURE 819; manufactured by Ciba Specialty Chemicals) and 1 part of 2-hydroxy-2-methyl-1-phenylpropan-1-one (product name: DAROCURE 1173; manufactured by Ciba Specialty Chemicals) were added to 100 parts of polymer [2] prepared in Production Example 2, and the resultant mixture was sufficiently mixed to prepare a curable composition.

### (Example 4)

First, 0.35 part of bis(2,4,6-trimethylbenzoyl)phenylphosphine oxide (product name: IRGACURE 819; manufactured by Ciba Specialty Chemicals) and 0.7 part of 1-hydroxycyclohexyl phenyl ketone (product name: IRGACURE 184; manufactured by Ciba Specialty Chemicals) were added to 100 parts of polymer [2] prepared in Production Example 2, and the resultant mixture was sufficiently mixed to prepare a curable composition.

### (Example 5)

First, 0.05 part of bis(2,4,6-trimethylbenzoyl)phenylphosphine oxide (product name: IRGACURE 819; manufactured by Ciba Specialty Chemicals) and 0.1 part of 2-hydroxy-2-methyl-1-phenylpropan-1-one (product name: DAROCURE 1173; manufactured by Ciba Specialty Chemicals) were added to 100 parts of polymer [2] prepared in Production Example 2, and the resultant mixture was sufficiently mixed to prepare a curable composition.

### (Example 6)

First, 0.75 part of bis(2,4,6-trimethylbenzoyl)phenylphosphine oxide (product name: IRGACURE 819; manufactured by Ciba Specialty Chemicals) and 1.5 part of 2-hydroxy-2-methyl-1-phenylpropan-1-one (product name: DAROCURE 1173; manufactured by Ciba Specialty Chemicals) were added to 100 parts of polymer [2] prepared in Production Example 2, and the resultant mixture was sufficiently mixed to prepare a curable composition.

The curable compositions obtained as described in Examples 3 to 6 were measured for permanent compression set and tensile properties by the methods given below. The results are shown in Table 2.

### <Permanent compression set testing>

Each of the active energy ray-curable compositions prepared in the above examples was molded into a 2-mm-thick sheet, and the sheet was irradiated under a metal halide lamp (80 W/cm, distance from radiation source 15 cm, belt speed 2.0 m/minute) for 60 seconds to give a sample for permanent compression set as prescribed in JIS K 6262. The sample prepared was subjected to permanent compression set testing according to JIS K 6262 under the test conditions: temperature 150°C x 70 hours.

### <Tensile properties evaluation>

Each of the active energy ray-curable compositions prepared in the above examples was molded into a 2-mm-thick sheet, and the sheet was irradiated under a metal halide lamp (80 W/cm, distance from radiation source 15 cm, belt speed 2.0 m/minute) for 30 seconds to give a sheet sample. Using this, dumbbell specimens for tensile testing were prepared according to JIS K 6251.

The tensile test was carried out according to JIS K 6251 under the conditions: test speed 200 mm/minute, 23°C x 55% relative humidity.

**Table 2**

| | Photopolymerization initiators | Amount (parts by weight) | High-temperature permanent compression set (%) (25% compression) | Tensile properties (JIS K 6251) | | |
|---|---|---|---|---|---|---|
| | | | | M100 (MPa) | Tb (MPa) | Eb (%) |
| Example3 | Irgacure819/ Darocure1173 | 0.5/1 | 12 (Excellent) | 0.53 | 0.56 | 106 |
| Example4 | Irgacure819/ Irgacure184 | 0.35/0.7 | 11 (Excellent) | - | 0.57 | 93 |
| Example5 | Irgacure819/ Darocure1173 | 0.05/0.1 | 5 (Excellent) | - | 0.51 | 73 |
| Example6 | Irgacure819/ Darocure1173 | 0.75/1.5 | Sample broke upon compression | 0.54 | 0.55 | 106 |

| | | | | | | |
|---|---|---|---|---|---|---|
| * M100: Modulus of dumbbell upon 100% elongation * Tb: Strength of dumbbell at break * Eb: Elongation of dumbbell at break * Evaluation criterion for permanent compression set: Excellent: No sample breakage. | | | | | | |

The results shown in Table 2 indicate that a sufficient extent of curability was attained in all the cured products of Examples 3 to 6, as judged from the tensile characteristics thereof and, further, that the cured products of Examples 3 to 5 in which the component (B) was used in specific amounts were prevented from breakage upon high-temperature permanent compression set testing and could realize a good permanent compression set feature even at high temperatures.

### INDUSTRIAL APPLICABILITY

The present invention consists in an active energy ray-curable composition comprising a vinyl polymer having at least one (meth)acryloyloxy group at a molecular terminus and an acylphosphine oxide photopolymerization initiator and makes it possible, on the occasion of curing of the curable composition, to reduce the dose of active energy rays and improve the depth curability as compared with the prior art. By using the active energy ray-curable composition of the invention which is excellent in curability with active energy rays, in particular in depth curability, it is possible to provide cured products excellent in thermal stability, weather resistance, oil resistance and permanent compression set features. By using an acylphosphine oxide photopolymerization initiator at specific levels, it is possible to render cured products excellent in high-temperature permanent compression set as well.

## Claims

1. An active energy ray-curable composition that can be cured to provide a molded product showing rubber elasticity, wherein the curable composition comprises the following components (A) and (B) as essential components:
(A) A vinyl polymer having at least one terminal group represented by the general formula (1):
-OC(O)C(R^{a})=CH₂ (1)
wherein R^{a} represents a hydrogen atom or an organic group containing 1 to 20 carbon atoms per molecule;
(B) At least one acylphosphine oxide photopolymerization initiator represented by the general formula (2):
R¹R²P(=O)C(=O)R³ (2)
wherein R¹ represents C₁₋₁₂ alkyl, benzyl, phenyl which may optionally be substituted, cyclohexyl, -COR³, -OR⁴ (R⁴ representing C₁₋₈ alkyl, phenyl or benzyl or a group represented by the general formula (3):
-A-(R²)P(=O)C(=O)R³ (3)
A representing C₁₋₁₈ alkylene, phenylene or biphenylene;
R² represents C₁₋₁₂ alkyl, benzyl, phenyl which may optionally be substituted, cyclohexyl or -COR³; and
R³ represents phenyl which may optionally be substituted, or a group represented by the general formula (4):
-B-C (=O) P (=O) R¹R² (4)
B representing C₁₋₁₂ alkylene, cyclohexylene or phenylene.

2. The active energy ray-curable composition that can be cured to provide a molded product showing rubber elasticity according to Claim 1
wherein the vinyl monomer constituting the main chain of the component (A) is a (meth)acrylic monomer.

3. The active energy ray-curable composition that can be cured to provide a molded product showing rubber elasticity according to Claim 1 or 2
wherein the vinyl monomer constituting the main chain of the component (A) is an acrylic ester monomer.

4. The active energy ray-curable composition that can be cured to provide a molded product showing rubber elasticity according to any one of Claims 1 to 3
wherein the vinyl monomer constituting the main chain of the component (A) comprises at least one monomer selected from among butyl acrylate, ethyl acrylate and 2-methoxyethyl acrylate.

5. The active energy ray-curable composition that can be cured to provide a molded product showing rubber elasticity according to any one of Claims 1 to 4
wherein, in the component (A), R^{a} in formula (1) is a hydrogen atom or a methyl group.

6. The active energy ray-curable composition that can be cured to provide a molded product showing rubber elasticity according to any one of Claims 1 to 5
wherein the component (A) is produced by reacting a halogen group-terminated vinyl polymer with a compound represented by the general formula (5):
M⁺⁻OC (O) C (R^{a}) =CH₂ (5)
wherein R^{a} represents a hydrogen atom or an organic group containing 1 to 20 carbon atoms and M⁺ represents an alkali metal ion or a quaternary ammonium ion.

7. The active energy ray-curable composition that can be cured to provide a molded product showing rubber elasticity according to Claim 6
wherein the halogen group-terminated vinyl polymer has a group represented by the general formula (6):
-CR⁵R⁶X (6)
wherein R⁵ and R⁶ represents the groups bound to the ethylenically unsaturated group of the vinyl monomer and X represents a chlorine atom, a bromine atom, or an iodine atom.

8. The active energy ray-curable composition that can be cured to provide a molded product showing rubber elasticity according to any one of Claims 1 to 5
wherein the component (A) is produced by reacting a hydroxyl group-terminated vinyl polymer with a compound represented by the general formula (7) :
X¹C(O)C(R^{a})=CH₂ (7)
wherein R^{a} represents a hydrogen atom or an organic group containing 1 to 20 carbon atoms and X¹ represents a chlorine atom, a bromine atom, or a hydroxyl group.

9. The active energy ray-curable composition that can be cured to provide a molded product showing rubber elasticity according to any one of Claims 1 to 5
wherein the component (A) is produced by (1) reacting a hydroxyl group-terminated vinyl polymer with a diisocyanate compound and (2) reacting the remaining isocyanate group with a compound represented by the general formula (8):
HO - R' - OC (O) C (R^{a}) = CH₂ (8)
wherein R^{a} represents a hydrogen atom or an organic group containing 1 to 20 carbon atoms and R' represents a divalent organic group containing 2 to 20 carbon atoms.

10. The active energy ray-curable composition that can be cured to provide a molded product showing rubber elasticity according to any one of Claims 1 to 9
wherein the main chain of the component (A) is produced by living radical polymerization of a vinyl monomer(s).

11. The active energy ray-curable composition that can be cured to provide a molded product showing rubber elasticity according to Claim 10
wherein the living radical polymerization is carried out in the manner of atom transfer radical polymerization.

12. The active energy ray-curable composition that can be cured to provide a molded product showing rubber elasticity according to Claim 11
wherein the atom transfer radical polymerization is carried out in the presence of a transition metal complex catalyst selected from among complexes of copper, nickel, ruthenium or iron.

13. The active energy ray-curable composition that can be cured to provide a molded product showing rubber elasticity according to Claim 12
wherein the transition metal complex is a copper complex.

14. The active energy ray-curable composition that can be cured to provide a molded product showing rubber elasticity according to any one of Claims 1 to 9
wherein the main chain of the component (A) is produced by polymerization of a vinyl monomer (s) using a chain transfer agent.

15. The active energy ray-curable composition that can be cured to provide a molded product showing rubber elasticity according to any one of Claims 1 to 14
wherein the component (A) has a number average molecular weight of not lower than 3000.

16. The active energy ray-curable composition that can be cured to provide a molded product showing rubber elasticity according to any one of Claims 1 to 15
wherein the component (A) vinyl polymer shows a weight average molecular weight/number average molecular weight ratio value of smaller than 1.8 as determined by gel permeation chromatography.

17. The active energy ray-curable composition that can be cured to provide a molded product showing rubber elasticity according to any one of Claims 1 to 16
which further comprises, in addition to the component (A) and component (B), a photopolymerization initiator other than the component (B) as a component (C).

18. The active energy ray-curable composition that can be cured to provide a molded product showing rubber elasticity according to Claim 17
wherein the component (C) photopolymerization initiator is at least one compound selected from among α-hydroxyketone compounds and phenyl ketone derivatives.

19. The active energy ray-curable composition that can be cured to provide a molded product showing rubber elasticity according to any one of Claims 1 to 18
which contains a radical-polymerizable group-containing monomer and/or oligomer.

20. The active energy ray-curable composition that can be cured to provide a molded product showing rubber elasticity according to any one of Claims 1 to 18
which contains an anionic polymerizable group-containing monomer and/or oligomer.

21. The active energy ray-curable composition that can be cured to provide a molded product showing rubber elasticity according to any one of Claims 1 to 18
which contains a (meth)acryloyl type group-containing monomer and/or oligomer.

22. The active energy ray-curable composition that can be cured to provide a molded product showing rubber elasticity according to Claims 21
which contains a (meth)acryloyl type group-containing monomer and/or oligomer having a number average molecular weight of not higher than 5000.

23. The active energy ray-curable composition that can be cured to provide a molded product showing rubber elasticity according to any one of Claims 1 to 22
wherein the content of the component (B) therein is 0.001 to 10 parts by weight per 100 parts by weight of the component (A) .

24. The active energy ray-curable composition that can be cured to provide a molded product showing rubber elasticity according to any one of Claims 1 to 23
wherein the content of the component (B) therein is 0.001 to 0.5 parts by weight per 100 parts by weight of the component (A).

25. The active energy ray-curable composition that can be cured to provide a molded product showing rubber elasticity according to any one of Claims 1 to 24
wherein the component (B) acylphosphine oxide photopolymerization initiator comprises at least one species selected from among 2,4,6-trimethylbenzoyldiphenyl-phosphine oxide, bis(2,4,6-trimethylbenzoyl)phenylphosphine oxide and bis(2,6-dimethoxybenzoyl)-2,4,4-trimethylpentylphosphine oxide.

26. A cured product obtained by irradiating an active energy ray-curable composition according to any one of Claims 1 to 25 with active energy rays.

27. Use of the active energy ray-curable composition according to any of claims 1 to 25 for preparing molded products for gaskets or packing.

## Patentansprüche

1. Durch Wirkenergiestrahlung härtbare Zusammensetzung, die gehärtet werden kann, um ein gegossenes Produkt bereitzustellen, das Kautschukelastizität aufweist, wobei die härtbare Zusammensetzung die folgenden Komponenten (A) und (B) als essentielle Komponenten umfasst:
(A) Vinylpolymer mit wenigstens einer terminalen Gruppe, die durch die allgemeine Formel (1) dargestellt wird:
-OC(O)C(R^{a})=CH₂ (1)
wobei R^{a} ein Wasserstoffatom oder eine organische Gruppe mit 1 bis 20 Kohlenstoffatomen pro Molekül darstellt,
(B) wenigstens einen Acylphosphinoxidphotopolymerisationsinitiator, der durch die allgemeine Formel (2) dargestellt wird:
R¹R²P(=O)C(=O)R³ (2)
wobei R¹ C₁₋₁₂-Alkyl, Benzyl, Phenyl, das wahlweise substituiert sein kann, Cyclohexyl, -COR³, -OR⁴ (wobei R⁴ ein C₁₋₈-Alkyl, Phenyl oder Benzyl oder eine durch die allgemeine Formel (3) dargestellte Gruppe darstellt:
-A-(R²)P(=O)C(=O)R³ (3)
wobei A ein C₁₋₁₈-Alkylen, Phenylen oder Biphenylen darstellt),
R² ein C₁₋₁₂-Alkyl, Benzyl, Phenyl, das wahlweise substituiert sein kann, Cyclohexyl oder -COR³ darstellt, und
R³ ein Phenyl, das wahlweise substituiert sein kann, oder eine durch die allgemeine Formel (4) dargestellte Gruppe darstellt:
-B-C(=O)P(=O)R¹R² (4)
wobei B ein C₁₋₁₂-Alkylen, Clyclohexylen oder Phenylen darstellt.

2. Durch Wirkenergiestrahlung härtbare Zusammensetzung, die gehärtet werden kann, um ein gegossenes Produkt bereitzustellen, das Kautschukelastizität aufweist, nach Anspruch 1,
wobei das Vinylmonomer, das die Hauptkette der Komponente (A) bildet, ein (Meth)acrylmonomer ist.

3. Durch Wirkenergiestrahlung härtbare Zusammensetzung, die gehärtet werden kann, um ein gegossenes Produkt bereitzustellen, das Kautschukelastizität aufweist, nach Anspruch 1 oder 2,
wobei das Vinylmonomer, das die Hauptkette der Komponente (A) bildet, ein Acrylestermonomer ist.

4. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 3,
wobei das Vinylmonomer, das die Hauptkette der Komponente (A) bildet, wenigstens ein Monomer umfasst, das aus Butylacrylat, Ethylacrylat und 2-Methoxyethylacrylat ausgewählt ist.

5. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 4,
wobei in der Komponente (A) R^{a} in der Formel (1) ein Wasserstoffatom oder eine Methylgruppe ist.

6. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 5,
wobei die Komponente (A) durch Reagieren eines mit einer Halogengruppe terminierenden Vinylpolymers mit einer Verbindung, die durch die allgemeine Formel (5) dargestellt wird, hergestellt wird:
M⁺-OC(O)C(R^{a})=CH₂ (5)
wobei R^{a} ein Wasserstoffatom oder eine organische Gruppe mit 1 bis 20 Kohlenstoffatomen darstellt und M⁺ ein Alkalimetallion oder ein quaternäres Ammoniumion darstellt.

7. Durch Wirkenergiestrahlung härtbare Zusammensetzung, die gehärtet werden kann, um ein gegossenes Produkt bereitzustellen, das Kautschukelastizität aufweist, nach Anspruch 6,
wobei das mit einer Halogengruppe terminierende Vinylpolymer eine Gruppe aufweist, die durch die allgemeine Formel (6) dargestellt wird:
-CR⁵R⁶X (6)
wobei R⁵ und R⁶ die Gruppen darstellen, die an der ethylenisch ungesättigten Gruppe des Vinylmonomers gebunden sind, und X ein Chloratom, ein Bromatom oder ein lodatom darstellt.

8. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 5,
wobei die Komponente (A) durch Reagieren eines mit einer Hydroxylgruppe terminierenden Vinylpolymers mit einer Verbindung, die durch die allgemeine Formel (7) dargestellt wird, hergestellt wird:
X¹C(O)C(R^{a})=CH₂ (7)
wobei R^{a} ein Wasserstoffatom oder eine organische Gruppe mit 1 bis 20 Kohlenstoffatomen darstellt und X¹ ein Chloratom, ein Bromatom oder eine Hydroxylgruppe darstellt.

9. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 5,
wobei die Komponente (A) durch (1) Reagieren eines mit einer Hydroxylgruppe terminierenden Vinylpolymers mit einer Diisocyanatverbindung und durch (2) Reagieren der verbliebenen Isocyanatgruppe mit einer Verbindung, die durch die allgemeine Formel (8) dargestellt ist, hergestellt wird:
HO-R'-OC(O)C(R^{a})=CH₂ (8)
wobei R^{a} ein Wasserstoffatom oder eine organsiche Gruppe mit 1 bis 20 Kohlenstoffatomen darstellt und R' eine zweiwertige organische Gruppe mit 2 bis 20 Kohlenstoffatomen darstellt.

10. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 9,
wobei die Hauptkette der Komponente (A) durch lebende Radikalpolymerisation eines Vinylmonomers hergestellt wird.

11. Durch Wirkenergiestrahlung härtbare Zusammensetzung, die gehärtet werden kann, um ein gegossenes Produkt bereitzustellen, das Kautschukelastizität aufweist, nach Anspruch 10,
wobei die lebende Radikalpolymerisation in der Weise eine Atomtransferradikalpolymerisation durchgeführt wird.

12. Durch Wirkenergiestrahlung härtbare Zusammensetzung, die gehärtet werden kann, um ein gegossenes Produkt bereitzustellen, das Kautschukelastizität aufweist, nach Anspruch 11,
wobei die Atomtransferradikalpolymerisation in der Anwesenheit eines Übergangsmetallkomplexkatalysators durchgeführt wird, der aus Kupfer-, Nickel-, Ruthenium- oder Eisenkomplexen ausgewählt ist.

13. Durch Wirkenergiestrahlung härtbare Zusammensetzung, die gehärtet werden kann, um ein gegossenes Produkt bereitzustellen, das Kautschukelastizität aufweist, nach Anspruch 12,
wobei der Übergangsmetallkomplex ein Kupferkomplex ist.

14. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 9,
wobei die Hauptkette der Komponente (A) durch Polymerisation eines Vinylmonomers unter Verwendung eines Kettentransfermittels hergestellt wird.

15. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 14,
wobei die Komponente (A) ein Zahlenmittel des Molekulargewichts von nicht weniger als 3.000 aufweist.

16. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 15,
wobei die Komponente (A) Vinylpolymer ein Verhältnis vom Gewichtsmittel des Molekulargewichts zum Zahlenmittel des Molekulargewichts von weniger als 1,8 aufweist, gemessen mittels Gelpermeationschromatographie.

17. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 16,
die ferner zusätzlich zur Komponente (A) und zur Komponente (B) einen Photopolymerisationsinitiator, der anders als die Komponente (B) ist, als eine Komponente (C) umfasst.

18. Durch Wirkenergiestrahlung härtbare Zusammensetzung, die gehärtet werden kann, um ein gegossenes Produkt bereitzustellen, das Kautschukelastizität aufweist, nach Anspruch 17,
wobei die Komponente (C) Photopolymerisationsinitiator wenigstens eine Verbindung ist, die aus α-Hydroxyketonverbindungen und Phenylketonderivaten ausgewählt ist.

19. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 18,
die Monomer und/oder Oligomer enthält, das eine radikalpolymerisierbare Gruppe enthält.

20. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 18,
die ein Monomer und/oder Oligomer enthält, das eine anionische polymerisierbare Gruppe enthält.

21. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 18,
die ein Monomer und/oder Oligomer enthält, das eine (Meth)acrylartige Gruppe enthält.

22. Durch Wirkenergiestrahlung härtbare Zusammensetzung, die gehärtet werden kann, um ein gegossenes Produkt bereitzustellen, das Kautschukelastizität aufweist, nach Anspruch 21,
die ein Monomer und/oder Oligomer enthält, das eine (Meth)acrylartige Gruppe enthält und ein Zahlenmittel des Molekulargewichts von nicht mehr als 5.000 aufweist.

23. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 22,
wobei der Gehalt der Komponente (B) darin 0,001 bis 10 Gewichtsanteile pro 100 Gewichtsanteile der Komponente (A) beträgt.

24. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 23,
wobei der Gehalt der Komponente (B) darin 0,001 bis 0,5 Gewichtsanteile pro 100 Gewichtsanteile der Komponente (A) beträgt.

25. Durch Wirkenergiestrahlung härtbare Zusammensetzung, die gehärtet werden kann, um ein gegossenes Produkt bereitzustellen, das Kautschukelastizität aufweist, nach einem der Ansprüche 1 bis 24,
wobei die Komponente (B) Acylphosphinoxidphotopolymerisationsinitiator wenigstens eines umfasst, das aus von 2,4,6-Trimethylbenzoyldiphenylphosphinoxid, bis-(2,4,6-Trimethylbenzoyl)phenylphosphinoxid und bis-(2,6-Dimethoxybenzoyl)-2,4,4-Trimethylpentylphosphinoxid ausgewählt ist.

26. Gehärtetes Produkt, das durch Bestrahlen einer durch Wirkenergiestrahlung härtbare Zusammensetzung, nach einem der Ansprüche 1 bis 25 mit Wirkenergiestrahlung erhalten ist.

27. Verwendung der durch Wirkenergiestrahlung härtbaren Zusammensetzung nach einem der Ansprüche 1 bis 25 zum Herstellen eines gegossenen Produkts für Dichtungen oder Verpackungen.

## Revendications

1. Composition durcissable par rayonnement d'énergie active qui peut être durcie pour fournir un produit moulé présentant une élasticité de caoutchouc, dans laquelle la composition durcissable comprend les constituants (A) et (B) suivants comme constituants essentiels :
(A) un polymère vinylique présentant au moins un groupe terminal représenté par la formule générale (1) :
-OC(O)C(R^{a})=CH₂ (1)
où R^{a} représente un atome d'hydrogène ou un groupe organique contenant de 1 à 20 atomes de carbone par molécule ;
(B) au moins un initiateur de photopolymérisation d'oxyde d'acylphosphine représenté par la formule générale (2) :
R¹R²P(=O)C(=O)R³ (2)
où R¹ représente un groupe alkyle en C₁₋₁₂, benzyle, phényle qui peut être éventuellement substitué, cyclohexyle, -COR³, -OR⁴ (R⁴ représentant un groupe alkyle en C₁₋₈, phényle ou benzyle ou un groupe représenté par la formule générale (3) :
-A-(R²)P(=O)C(=O)R³ (3)
A représentant un groupe alkylène en C₁₋₁₈, phénylène ou biphénylène ;
R² représente un groupe alkyle en C₁₋₁₂, benzyle, phényle qui peut être éventuellement substitué, cyclohexyle ou -COR³ ; et
R³ représente un groupe phényle qui peut être éventuellement substitué, ou un groupe représenté par la formule générale (4) :
-B-C(=O)P(=O)R¹R² (4)
B représentant un groupe alkylène en C₁₋₁₂, cyclohexylène ou phénylène.

2. Composition durcissable par rayonnement d'énergie active qui peut être durcie pour fournir un produit moulé présentant une élasticité de caoutchouc selon la revendication 1
dans laquelle le monomère vinylique constituant la chaîne principale du constituant (A) est un monomère (méth)acrylique.

3. Composition durcissable par rayonnement d'énergie active qui peut être durcie pour fournir un produit moulé présentant une élasticité de caoutchouc selon la revendication 1 ou 2
dans laquelle le monomère vinylique constituant la chaîne principale du constituant (A) est un monomère d'ester acrylique.

4. Composition durcissable par rayonnement d'énergie active qui peut être durcie pour fournir un produit moulé présentant une élasticité de caoutchouc selon l'une quelconque des revendications 1 à 3
dans laquelle le monomère vinylique constituant la chaîne principale du constituant (A) comprend au moins un monomère choisi parmi l'acrylate de butyle, l'acrylate d'éthyle et l'acrylate de 2-méthoxy-éthyle.

5. Composition durcissable par rayonnement d'énergie active qui peut être durcie pour fournir un produit moulé présentant une élasticité de caoutchouc selon l'une quelconque des revendications 1 à 4
dans laquelle, dans le constituant (A), R^{a} dans la formule (1) est un atome d'hydrogène ou un groupe méthyle.

6. Composition durcissable par rayonnement d'énergie active qui peut être durcie pour fournir un produit moulé présentant une élasticité de caoutchouc selon l'une quelconque des revendications 1 à 5
dans laquelle le constituant (A) est produit par réaction d'un polymère vinylique terminé par un groupe halogène avec un composé représenté par la formule générale (5) :
M⁺-OC(O)C(R^{a})=CH₂ (5)
où R^{a} représente un atome d'hydrogène ou un groupe organique contenant de 1 à 20 atomes de carbone et M⁺ représente un ion de métal alcalin ou un ion d'ammonium quaternaire.

7. Composition durcissable par rayonnement d'énergie active qui peut être durcie pour fournir un produit moulé présentant une élasticité de caoutchouc selon la revendication 6
dans laquelle le polymère vinylique terminé par un groupe d'halogène présente un groupe représenté par la formule générale (6) :
-CR⁵R⁶X (6)
où R⁵ et R⁶ représentent les groupes liés au groupe éthyléniquement insaturé du monomère vinylique et X représente un atome de chlore, un atome de brome, ou un atome d'iode.

8. Composition durcissable par rayonnement d'énergie active qui peut être durcie pour fournir un produit moulé présentant une élasticité de caoutchouc selon l'une quelconque des revendications 1 à 5
dans laquelle le constituant (A) est produit par réaction d'un polymère vinylique terminé par un groupe hydroxyle avec un composé représenté par la formule générale (7) :
X¹C(O)C(R^{a})=CH₂ (7)
où R^{a} représente un atome d'hydrogène ou un groupe organique contenant de 1 à 20 atomes de carbone et X¹ représente un atome de chlore, un atome de brome, ou un groupe hydroxyle.

9. Composition durcissable par rayonnement d'énergie active qui peut être durcie pour fournir un produit moulé présentant une élasticité de caoutchouc selon l'une quelconque des revendications 1 à 5
dans laquelle le constituant (A) est produit par (1) réaction d'un polymère vinylique terminé par un groupe hydroxyle avec un composé diisocyanate et (2) réaction du groupe isocyanate restant avec un composé représenté par la formule générale (8) :
HO-R'-OC(O)C(R^{a})=CH₂ (8)
où R^{a} représente un atome d'hydrogène ou un groupe organique contenant de 1 à 20 atomes de carbone et R' représente un groupe organique divalent contenant de 2 à 20 atomes de carbone.

10. Composition durcissable par rayonnement d'énergie active qui peut être durcie pour fournir un produit moulé présentant une élasticité de caoutchouc selon l'une quelconque des revendications 1 à 9
dans laquelle la chaîne principale du constituant (A) est produite par polymérisation radicalaire vivante d'un(de) monomère(s) vinylique(s).

11. Composition durcissable par rayonnement d'énergie active qui peut être durcie pour fournir un produit moulé présentant une élasticité de caoutchouc selon la revendication 10
dans laquelle la polymérisation radicalaire vivante est réalisée selon une polymérisation radicalaire par transfert d'atome.

12. Composition durcissable par rayonnement d'énergie active qui peut être durcie pour fournir un produit moulé présentant une élasticité de caoutchouc selon la revendication 11
dans laquelle la polymérisation radicalaire par transfert d'atome est réalisée en présence d'un catalyseur de complexe de métal de transition choisi parmi des complexes de cuivre, de nickel, de ruthénium ou de fer.

13. Composition durcissable par rayonnement d'énergie active qui peut être durcie pour fournir un produit moulé présentant une élasticité de caoutchouc selon la revendication 12
dans laquelle le complexe de métal de transition est un complexe de cuivre.

14. Composition durcissable par rayonnement d'énergie active qui peut être durcie pour fournir un produit moulé présentant une élasticité de caoutchouc selon l'une quelconque des revendications 1 à 9
dans laquelle la chaîne principale du constituant (A) est produite par polymérisation d'un(de) monomère(s) vinylique(s) en utilisant un agent de transfert de chaîne.

15. Composition durcissable par rayonnement d'énergie active qui peut être durcie pour fournir un produit moulé présentant une élasticité de caoutchouc selon l'une quelconque des revendications 1 à 14
dans laquelle le constituant (A) présente une masse moléculaire moyenne en nombre d'au moins 3 000.

16. Composition durcissable par rayonnement d'énergie active qui peut être durcie pour fournir un produit moulé présentant une élasticité de caoutchouc selon l'une quelconque des revendications 1 à 15
dans laquelle le polymère vinylique de constituant (A) présente un rapport masse moléculaire moyenne en masse/masse moléculaire moyenne en nombre de valeur inférieure à 1,8 comme déterminé par chromatographie par perméation sur gel.

17. Composition durcissable par rayonnement d'énergie active qui peut être durcie pour fournir un produit moulé présentant une élasticité de caoutchouc selon l'une quelconque des revendications 1 à 16
laquelle comprend de plus, en plus du constituant (A) et du constituant (B), un initiateur de photopolymérisation différent du constituant (B) comme un constituant (C)

18. Composition durcissable par rayonnement d'énergie active qui peut être durcie pour fournir un produit moulé présentant une élasticité de caoutchouc selon la revendication 17
dans laquelle l'initiateur de photopolymérisation de constituant (C) est au moins un composé choisi parmi des composés d'α-hydroxycétone et des dérivés de phénylcétone.

19. Composition durcissable par rayonnement d'énergie active qui peut être durcie pour fournir un produit moulé présentant une élasticité de caoutchouc selon l'une quelconque des revendications 1 à 18
qui contient un monomère et/ou un oligomère contenant un groupe radicalairement polymérisable.

20. Composition durcissable par rayonnement d'énergie active qui peut être durcie pour fournir un produit moulé présentant une élasticité de caoutchouc selon l'une quelconque des revendications 1 à 18
qui contient un monomère et/ou un oligomère contenant un groupe polymérisable anionique.

21. Composition durcissable par rayonnement d'énergie active qui peut être durcie pour fournir un produit moulé présentant une élasticité de caoutchouc selon l'une quelconque des revendications 1 à 18
qui contient un monomère et/ou un oligomère contenant un groupe de type (méth)acryloyle.

22. Composition durcissable par rayonnement d'énergie active qui peut être durcie pour fournir un produit moulé présentant une élasticité de caoutchouc selon la revendication 21
qui contient un monomère et/ou un oligomère contenant un groupe de type (méth)acryloyle présentant une masse moléculaire moyenne en nombre d'au plus 5 000.

23. Composition durcissable par rayonnement d'énergie active qui peut être durcie pour fournir un produit moulé présentant une élasticité de caoutchouc selon l'une quelconque des revendications 1 à 22
dans laquelle la teneur du constituant (B) dans celle-ci est de 0,001 à 10 parties en poids pour 100 parties en poids du constituant (A).

24. Composition durcissable par rayonnement d'énergie active qui peut être durcie pour fournir un produit moulé présentant une élasticité de caoutchouc selon l'une quelconque des revendications 1 à 23
dans laquelle la teneur du constituant (B) dans celle-ci est de 0,001 à 0,5 partie en poids pour 100 parties en poids du constituant (A).

25. Composition durcissable par rayonnement d'énergie active qui peut être durcie pour fournir un produit moulé présentant une élasticité de caoutchouc selon l'une quelconque des revendications 1 à 24
dans laquelle l'initiateur de photopolymérisation d'oxyde d'acylphosphine de constituant (B) comprend au moins une espèce choisie parmi l'oxyde de 2,4,6-triméthylbenzoyldiphényl-phosphine, l'oxyde de bis(2,4,6-triméthylbenzoyl)phénylphosphine et l'oxyde de bis(2,6-diméthoxybenzoyl)-2,4,4-triméthylpentylphosphine.

26. Produit durci obtenu par irradiation d'une composition durcissable par rayonnement d'énergie active selon l'une quelconque des revendications 1 à 25 avec des rayonnements d'énergie active.

27. Utilisation de la composition durcissable par rayonnement d'énergie active selon l'une quelconque des revendications 1 à 25 pour la préparation de produits moulés pour des joints ou un emballage.
